# FASCICULE DE BREVET EUROPEEN

(11) **EP 2 442 902 B1**
(45) Date de publication et mention de la délivrance du brevet: **18.09.2019**
(21) Numéro de dépôt: 10743195.9
(22) Date de dépôt: 18.06.2010
(51) Int. Cl.: B01J 19/00, B01F 13/00, B01L 3/00

(54) **SYSTEME MICROFLUIDIQUE ET PROCEDE POUR LE TRANSFERT D'ELEMENTS ENTRE PHASES LIQUIDES ET UTILISATION DE CE SYSTEME POUR EXTRAIRE CES ELEMENTS**
MIKROFLUIDISCHES SYSTEM UND VERFAHREN ZUR ÜBERTRAGUNG VON ELEMENTEN ZWISCHEN FLÜSSIGPHASEN UND VERWENDUNG DIESES SYSTEMS ZUR EXTRAKTION DIESER ELEMENTE
MICROFLUIDIC SYSTEM AND METHOD FOR TRANSFERRING ELEMENTS BETWEEN LIQUID PHASES AND USE OF SAID SYSTEM FOR EXTRACTING SAID ELEMENTS

(30) Priorité: 19.06.2009 FR 0902988
(43) Date de publication de la demande: 25.04.2012
(73) Titulaire: Commissariat à l'Énergie Atomique et aux Énergies Alternatives, 75015 Paris (FR)
(72) Inventeur: BERTHIER, Jean, F-38240 Meylan (FR); LE VOT, Sophie, F-38760 Varces (FR); RIVERA, Florence, F-38100 Grenoble (FR)
(74) Mandataire: Gevers & Orès
(86) Numéro de dépôt international: PCT/FR2010/000453
(87) Numéro de publication internationale: WO 2010/146261

(56) Documents cités:
- EP-A2- 2 119 503
- US-A1- 2002 175 079
- US-A1- 2003 159 999
- US-A1- 2003 226 806
- US-A1- 2004 028 580
- US-A1- 2006 035 386
- US-A1- 2007 059 719

## Description

La présente invention concerne un système microfluidique comprenant une unité d'extraction d'éléments de taille micrométrique ou millimétrique d'une phase liquide à au moins une autre phase liquide, une utilisation de ce système microfluidique pour réaliser cette extraction de préférence pour gélifier par réticulation des capsules polymériques enrobant de tels éléments, et un procédé correspondant d'extraction de ces éléments. L'invention s'applique à des éléments biologiques ou non de petite taille, tels que des brins d'ADN, des protéines, des cellules, des amas de cellules ou même des objets auxiliaires dans les applications biotechnologiques comme par exemple des billes magnétiques ou des particules fluorescentes, à titre non limitatif.

Le transfert d'éléments de petite taille d'une phase liquide dans une autre phase liquide immiscible est un problème d'une importance considérable. On peut par exemple citer le document EP-B1-787 029 pour un tel transfert réalisé exclusivement par diffusion. Quant au transfert par convection forcée, il est en général difficile car il faut contraindre les éléments par une force qui les dirige normalement à l'écoulement et, spécialement dans le cas d'un système diphasique, cette force doit être suffisante pour que ces éléments traversent l'interface entre les deux liquides. Or, ce passage est freiné par la tension de surface entre les deux liquides et par les forces capillaires. Pour effectuer ce transfert de façon passive, il est connu d'utiliser le principe du déflecteur qui peut se présenter sous plusieurs formes, comme par exemple un réseau de piliers ou une simple ligne orientée de piliers.

La technique des réseaux de piliers a été développée pour le tri par « Deterministic Lateral Displacement » ou « DLD » (pour déplacement latéral déterministe). Cette technique (voir en particulier l'article de D. W. Inglis, J. A. Davis, R. H. Austin and J. C. Sturm., Critical particle size for fractionation by deterministic lateral displacement, Lab Chip 6: 655-658, 2006) repose sur l'utilisation d'un réseau périodique d'obstacles qui vont perturber ou non la trajectoire des particules à trier. Les particules plus petites qu'une taille critique Dc (fixée par la géométrie du dispositif) ne sont globalement pas déviées par les piliers, tandis que celles plus grosses que Dc sont déviées dans la même direction à chaque rangée de plots, ce qui permet la séparation en taille des particules. Cependant, il apparaît que cette technique « DLD » a été à notre connaissance uniquement utilisée à ce jour pour le tri de particules en simple phase sans changement de fluide porteur, comme illustré par exemple dans les documents WO-A-2004/037374, US-A-2007059781 ou US-A-2007026381.

US-A-2003/0226806 et US-A-2004/0028580 décrivent des systèmes microfluidiques pour l'extraction de composés.

La gélification de gouttelettes polymériques est un exemple typique de la nécessité d'un changement de fluide porteur. En biotechnologie, l'utilisation de telles gouttelettes contenant des objets biologiques est de plus en plus prometteuse. Néanmoins, l'étape de gélification qui doit suivre celle de production des gouttelettes est un verrou technologique à l'heure actuelle. En effet, ces gouttelettes ou capsules qui sont typiquement à base d'un hydrogel (e.g. un hydrogel d'alginate) sont produites dans une phase organique (e.g. de l'huile de soja) et doivent être transférées dans une phase aqueuse contenant des polyions tels que des ions calcium à titre d'agent de réticulation, pour obtenir la gélification de l'hydrogel. Les techniques actuelles sont toutes déficientes, car elles provoquent une déformation très importante des capsules qu'il faut préserver le plus possible dans leur forme initiale sphérique. On ne peut donc pas effectuer de transfert de façon « brutale », où des forces d'intensité élevée s'exercent sur les capsules, et cela est d'autant sensible que les éléments à encapsuler sont de grande taille (entre 5 µm et 1 mm) et sont fragiles comme des cellules ou amas de cellules, par exemple.

Le but de l'encapsulation de cellules, par exemple telles que les îlots de Langerhans, dans des microcapsules est de les protéger contre les attaques du système immunitaire lors d'une transplantation. La porosité de la capsule doit être telle qu'elle permet l'entrée des molécules de poids moléculaire faible essentielles au métabolisme des cellules encapsulées (nutriments, oxygène, etc.) tout en empêchant l'entrée de substances de poids moléculaire plus élevé comme les anticorps ou les cellules du système immunitaire. Cette perméabilité sélective de la capsule assure l'absence de contact direct entre les cellules encapsulées du donneur et les celles du système immunitaire du receveur de la transplantation, ce qui permet de limiter les doses de traitement immunosuppresseur utilisées lors de la transplantation (traitement aux effets secondaires lourds). Outre leur perméabilité sélective, les capsules produites doivent être biocompatibles, résistantes mécaniquement, et de taille adaptée aux cellules à encapsuler.

Suite à la formation des capsules enrobant les cellules, il est nécessaire de procéder à leur gélification pour solidifier la couche protectrice.

La gélification des capsules d'alginate contenant des cellules se fait classiquement par un procédé de gélification externe, où l'on réticule les billes d'alginate dans un bain de polycations (généralement de CaCl₂) par diffusion des polycations dans la capsule d'alginate à un pH proche de 7 pour maximiser la viabilité des cellules. Un inconvénient de cette technique est qu'elle ne permet pas d'obtenir des capsules hautement homogènes (polydispersité élevée) et sphériques. On pourra notamment se reporter à l'article de K. Liu, H. J. Ding, Y. Chen, X.Z. Zhao, Droplet-based synthetic method using microflow focusing and droplet fusion, Microfluid. Nanofluid, Vol. 3, pp. 239-243, 2007, qui présente un système microfluidique mettant en oeuvre un contact dans une chambre circulaire de « ralentissement » et consistant à faire coalescer chaque capsule d'alginate avec une gouttelette aqueuse contenant du carbonate de calcium à titre d'agent de réticulation, avec des capsules gélifiées qui s'écartent nettement de la géométrie sphérique recherchée.

Il existe également un procédé de gélification interne, qui consiste à gélifier les capsules d'alginate par la mise en présence de cristaux de carbonate de calcium dans la phase d'alginate. Lorsque les gouttelettes d'alginate sont plongées dans une solution contenant de l'acide acétique, les ions calcium sont libérés et se fixent sur l'alginate, permettant ainsi la gélification. Ce procédé, bien que permettant d'obtenir des capsules plus homogènes et sensiblement sphériques, présente néanmoins l'inconvénient de devoir être mis en oeuvre à un pH acide proche de 6,4, pénalisant ainsi la viabilité des cellules. On pourra se reporter à l'article de V. L. Workman, S. B. Dunnett, P. Kille, and D. D. Palmer, On-chip alginate microencapsulation of functional cells, Macromolecular rapid communications, Vol. 29(2), pp. 165-170, 2008 pour une description d'un système microfluidique mettant en oeuvre ce procédé de gélification interne.

Les techniques connues d'encapsulation/ gélification présentent en outre les inconvénients suivants:
- la taille des capsules n'est pas adaptée à la taille des cellules ou îlots à encapsuler,
- l'encapsulation qui est le plus souvent suivie d'une gélification externe, par laquelle les capsules sont gélifiées en tombant dans un bain de polycations, n'est pas automatisée mais manuelle ce qui entraîne une hétérogénéité du temps de réticulation d'une capsule à une autre, et
- la dispersion en taille des capsules gélifiées augmente lorsque la taille des gouttelettes diminue.

Un but de la présente invention est de proposer un système microfluidique selon la revendication 1 permettant notamment de remédier aux inconvénients précités en relation avec la gélification de capsules, ce système comportant un substrat dans lequel est gravé un réseau de microcanaux comprenant une unité d'extraction d'éléments de taille micrométrique ou millimétrique et qui est recouvert d'un capot de protection, l'unité d'extraction comprenant :
- un microcanal d'appauvrissement dans lequel circule une première phase à appauvrir,
- au moins un microcanal d'enrichissement dans lequel circule une deuxième phase à enrichir, ces microcanaux d'appauvrissement et d'enrichissement se rejoignant deux à deux par deux jonctions amont et aval en formant une chambre de transfert entre ces jonctions, chaque jonction étant telle que les axes centraux de ces microcanaux soient parallèles ou forment un angle aigu de part et d'autre de la jonction, et
- des moyens de transfert disposés dans ledit microcanal d'appauvrissement et aptes à transférer lesdits éléments de ce microcanal d'appauvrissement vers ledit au moins un microcanal d'enrichissement.

A cet effet, un système microfluidique selon l'invention est tel que lesdits moyens de transfert comprennent des plots s'étendant transversalement à l'axe central dudit microcanal d'appauvrissement, et que l'unité d'extraction comprend en outre des moyens de stabilisation d'interface qui sont disposés en aval des moyens de transfert entre lesdites jonctions et qui comprennent des piliers ou bien un revêtement de surface localisé sur une zone de la jonction aval tournée vers l'un au moins des microcanaux.

Par « taille » des éléments à extraire, tels que des capsules enrobant des amas de cellules, par exemple, on entend dans la présente description le diamètre ou plus généralement la plus grande dimension transversale de chacun de ces éléments.

Par taille millimétrique, on entend une taille des éléments comprise entre quelques 100 µm et quelques mm. Par taille micrométrique, on entend une taille des éléments inférieure à 100 µm.

Par axe de chaque microcanal, on entend un axe central parallèle à la direction d'écoulement du liquide dans le microcanal.

Selon une autre caractéristique de l'invention, lesdits moyens de stabilisation d'interface peuvent être situés à proximité desdits plots et sont sensiblement alignés avec ladite jonction aval, ces moyens de stabilisation d'interface pouvant exercer en outre une fonction anti-retour des éléments ayant été séparés de ladite première phase par lesdits plots ou bien étant associés à des moyens séparés exerçant cette fonction anti-retour.

Avantageusement, ces moyens de stabilisation d'interface peuvent comprendre lesdits piliers qui présentent de préférence des arêtes saillantes et dont le dernier peut être adjacent à ladite jonction aval, ces piliers pouvant être régulièrement espacés avec le premier pilier qui est adjacent au dernier plot des moyens de transfert. Le fait que les arêtes des piliers soient saillantes permet une bonne accroche de l'interface.

Dans le cas où l'on utilise à titre de moyens de stabilisation d'interface et anti-retour de tels piliers, ceux-ci sont séparés deux à deux entre eux d'une distance qui est prévue inférieure à la taille des éléments transférés.

Selon une autre caractéristique de l'invention, ladite chambre de transfert s'étend continûment entre ladite ou chaque jonction amont et la jonction aval correspondante, laquelle est de préférence également conçue pour que les flux restent sensiblement parallèles le long de cette chambre.

Avantageusement, ladite ou chaque jonction amont et ladite jonction aval correspondante peuvent présenter chacune en vue de dessus :
- sensiblement une forme de V, ladite unité présentant alors de préférence une forme de carrefour à pattes-d'oie, ou bien
- sensiblement une forme de U, ladite unité présentant alors de préférence une forme d'un ou plusieurs H reliés entre eux dont la ou chaque barre transversale élargie forme ladite chambre et dont les jambages forment les entrées et sorties.

Ainsi, tant la ou chaque jonction amont que la ou chaque jonction aval sont de préférence telles que les flux ou écoulements des deux phases qui y convergent et qui en divergent sont respectivement centrés sur des axes sensiblement parallèles ou faisant entre eux un angle aigu. On notera que ce parallélisme ou cet angle aigu des flux n'est pas à confondre avec le parallélisme ou l'angle aigu caractérisant la jonction elle-même correspondante (i.e. la paroi externe de cette jonction), mais témoigne de la géométrie interne de la jonction concernée, comme cela sera expliqué plus en détails ci-après.

Egalement avantageusement, la ou chaque jonction amont et la ou chaque jonction aval peuvent se prolonger en direction de la jonction opposée par une cloison imperméable de séparation entre phases s'étendant sur une distance conçue pour accroître le parallélisme desdits flux dans ladite chambre. On notera que ces cloisons amont et aval de séparation prolongeant les faces internes de parois respectives des jonctions amont et aval permettent de procurer des directions de flux adjacents se rejoignant et se séparant qui sont sensiblement parallèles, même si ces jonctions forment chacune un angle droit ou même obtus au niveau de la face externe de leur paroi. En d'autres termes, ces cloisons de séparation peuvent permettre de corriger un angle de jonction trop élevé (notamment égal ou supérieur à 90°) entre deux entrées ou deux sorties pour que les flux qui s'y rejoignent ou s'en éloignent soient sensiblement parallèles.

Avantageusement en relation avec la variante précitée pour lesdits moyens de stabilisation d'interface, ceux-ci peuvent comprendre ledit revêtement de surface qui est localisé sur au moins une face de ladite cloison de séparation.

Selon une autre caractéristique de l'invention, ce système est pourvu de moyens externes de mise en circulation sous pression des phases pour les faire circuler par convection forcée dans lesdites entrées et sorties, et lesdits moyens de transfert sont de type hydrodynamiques à fluidique exclusivement passive.

On notera que l'unité d'extraction du système microfluidique se distingue de celles utilisant un transfert purement diffusif, comme par exemple dans le document précité EP-B1-787 029. De plus, cette unité ne met pas en oeuvre de méthodes actives - par exemple électriques - qui peuvent endommager les éléments que l'on manipule, notamment dans le cas d'objets biologiques, mais uniquement une méthode passive (la seule source d'énergie utilisée étant les micropompes externes au système).

Les fluides circulant respectivement dans le microcanal d'appauvrissement et dans le microcanal d'enrichissement s'écoulent dans le même sens. Ils sont préférentiellement immiscibles, ce qui permet la présence d'une interface bien délimitée entre ces deux fluides. Par « bien délimitée », on entend qu'elle s'étend sur une faible épaisseur, inférieure à quelques nm.

Lesdits plots de transfert sont à paroi dépourvue d'arêtes saillantes tels que des plots cylindriques, et sont disposés sur au moins une rangée en formant pour la ou chaque rangée un angle de 5° à 85° avec la direction de ce microcanal et de préférence compris entre 20° et 60°, ces plots étant destinés à dévier sélectivement tout ou partie desdits éléments pour les forcer à se diriger vers ledit ou chaque microcanal d'enrichissement adjacent. On notera que la ou chaque rangée de plots s'étend ainsi de façon transversale à la direction d'écoulement du fluide circulant dans ce microcanal d'appauvrissement.

Avantageusement, les moyens de transfert selon cet exemple peuvent comprendre plusieurs rangées de plots qui sont agencées de manière successive le long du microcanal d'appauvrissement dans la chambre de transfert, et qui comprennent :
- une rangée amont adjacente à ladite jonction amont, qui s'étend en outre sur au moins une partie de la section de passage dudit microcanal d'appauvrissement adjacent et dont les obstacles sont dimensionnés et espacés de sorte à s'opposer au passage d'au moins une catégorie d'éléments de plus grande taille supérieure à l'espacement entre ces obstacles amont et les dévier vers une sortie distale de ce microcanal d'enrichissement qui est ainsi couplée à cette rangée amont, et
- au moins une rangée aval adjacente à ladite jonction aval, qui s'étend sur une section de passage inférieure à celle de la rangée amont et dont les obstacles sont dimensionnés et espacés de sorte à s'opposer au passage d'au moins une autre catégorie d'éléments, de plus petite taille que les éléments précédents, supérieure à l'espacement entre ces obstacles aval qui ont traversé la rangée amont et les dévier vers ce microcanal d'enrichissement en les canalisant vers une sortie proximale de ce dernier qui forme par exemple une patte-d'oie avec ladite sortie distale et avec le microcanal d'appauvrissement et qui est ainsi couplée à cette rangée aval.

Conformément à une variante de réalisation de ce premier mode, ces moyens de transfert par déviation peuvent être disposés sous forme de rangées de plots qui sont agencées dans la chambre transversalement au microcanal d'appauvrissement et, selon l'application, au microcanal d'enrichissement, et qui sont conçues pour l'obtention d'un déplacement latéral déterministe (« DLD ») laissant passer les éléments en les déviant progressivement à chaque passage d'une rangée à la rangée suivante.

Conformément à une autre variante de réalisation de ce premier mode, ces moyens de transfert par déviation peuvent comprendre en outre (i.e. en plus desdits plots) au moins un déflecteur qui est constitué d'une saillie interne de la paroi latérale dudit microcanal d'appauvrissement formée en regard de ladite chambre de transfert et qui présente par exemple une section transversale triangulaire.

Concernant lesdits moyens de stabilisation d'interface qui sont aptes à stabiliser l'interface entre lesdits flux en contact mutuel, on notera qu'ils permettent d'éviter que des gouttes de liquide d'une phase (et notamment de la phase à appauvrir) soit formées dans une autre phase (notamment dans la phase à enrichir). De tels moyens de stabilisation sont utiles lorsque les deux phases circulant dans des microcanaux adjacents sont immiscibles.

Comme indiqué ci-dessus, ladite chambre de transfert peut également comporter des moyens anti-retour permettant d'assurer une fonction dite d'anti-retour, c'est-à-dire qu'ils s'opposent au retour dans la phase appauvrie desdits éléments transférés vers la phase d'enrichissement. Cette chambre de transfert peut comporter des moyens de stabilisation d'interface et d'anti-retour, i.e. assurant à la fois les fonctions de stabilisation d'interface et d'anti-retour.

Ces moyens de stabilisation d'interface et ces moyens anti-retour sont agencés en aval desdits moyens de transfert en une zone interfaciale entre ces flux située sensiblement dans le prolongement de la jonction aval. Des moyens de stabilisation d'interface peuvent également être disposés en amont de cette zone interfaciale.

Selon un second mode de réalisation de l'invention, lesdits microcanaux d'appauvrissement et d'enrichissement ont leurs jonctions amont et aval en forme de pattes-d'oie, lesdits plots de transfert, par exemple de section carrée, étant situés en aval de la jonction amont et de manière adjacente à la jonction aval, ces plots étant régulièrement espacés dans le prolongement de la paroi latérale de l'entrée du microcanal d'appauvrissement qui est opposée à l'entrée du microcanal d'enrichissement, et dans le prolongement de la sortie du microcanal d'enrichissement, laquelle sortie est sensiblement coaxiale à l'entrée du microcanal d'appauvrissement, de sorte à canaliser les éléments sans les dévier de leur trajectoire de l'entrée du microcanal d'appauvrissement à la sortie du microcanal d'enrichissement.

Avantageusement, ces moyens de transfert qui ne mettent pas en oeuvre de déviation des éléments à extraire peuvent être exclusivement constitués d'une telle rangée de plots qui s'étend transversalement à la direction d'écoulement du fluide circulant dans le canal d'appauvrissement. L'espacement entre ces plots est alors inférieure à la taille des éléments à séparer. Sur une première partie, une telle rangée de plots constitue un moyen de transfert des éléments du microcanal d'appauvrissement vers le microcanal d'enrichissement et, sur une seconde partie, cette rangée de plots est au contact de l'interface entre les fluides circulant respectivement dans les microcanaux d'appauvrissement et d'enrichissement. Sur cette seconde partie, la rangée de plots constitue alors un moyen de stabilisation de l'interface et d'anti-retour des éléments séparés.

Selon une autre caractéristique de l'invention commune aux deux modes de réalisation précités, ladite unité d'extraction peut être couplée en aval à au moins un moyen de réduction des pertes de charge, tel qu'un serpentin, qui est également inclus dans ledit réseau de microcanaux et qui est destiné à maintenir une pression de la deuxième phase d'enrichissement légèrement supérieure à celle de la première phase d'appauvrissement pour éviter que des gouttelettes de cette dernière ne pénètrent dans cette deuxième phase d'enrichissement et de manière à avoir des vitesses d'écoulement sensiblement égales des deux côtés de l'interface. On notera que tout moyen permettant de réduire les pertes de charge peut être utilisé, en remplacement de ce serpentin qui n'est qu'un exemple de réalisation de l'invention.

Selon une autre caractéristique de l'invention également commune à ces deux modes de réalisation, ladite unité d'extraction peut être couplée en amont à une unité d'encapsulation des éléments, tels que des amas de cellules, également comprise dans ledit système microfluidique, l'unité d'extraction étant alors apte à assurer la gélification par réticulation de chaque capsule polymérique obtenue en sortie de l'unité d'encapsulation, un module de pré-gélification étant optionnellement intercalé entre ces unités d'encapsulation et d'extraction, et un module d'encapsulation supplémentaire par exemple de type dispositif microfluidique à focalisation d'écoulement (« MFDD ») pouvant être prévu en aval de l'unité d'extraction.

D'une manière générale, on notera que les systèmes microfluidiques selon l'invention doivent être de préférence stérilisables, car les capsules gélifiées obtenues doivent pouvoir être transplantées chez un individu, le cas échéant. Un système selon l'invention peut être réalisé en une matière plastique (par exemple en PDMS), en verre ou en silicium, à titre non limitatif.

Un système microfluidique selon l'invention, tel que défini par l'ensemble des caractéristiques précitées, peut être avantageusement utilisé pour extraire des éléments de taille millimétrique ou micrométrique, tels que des amas de cellules comme par exemple des îlots de Langerhans, d'une première phase liquide à appauvrir vers au moins une deuxième phase liquide à enrichir miscible ou non avec cette première phase ou avec une phase intermédiaire adjacente.

Selon un exemple préférentiel de réalisation de l'invention, cette utilisation consiste à réaliser la gélification par réticulation de capsules d'enrobage polymériques qui sont préalablement formées autour de ces éléments au sein dudit système microfluidique et qui sont par exemple à base d'un hydrogel d'alginate, par transfert de ces capsules enrobant respectivement lesdits éléments d'une phase organique huileuse à appauvrir les contenant vers une phase aqueuse à enrichir qui est immiscible avec cette phase huileuse et qui contient un agent gélifiant de préférence à base de polyions, tels que des ions calcium.

On notera que ces capsules préalablement formées peuvent être monocouche ou multicouches et sont avantageusement biocompatibles, mécaniquement résistantes et à perméabilité sélective. Le polymère utilisé pour l'encapsulation peut être par exemple un hydrogel d'alginate, polymère le plus couramment utilisé pour l'encapsulation. Toutefois, d'autres matières d'encapsulation pourraient être choisie, comme le chitosan, les carraghénanes, les gels d'agarose, les polyéthylènes glycols (PEG), à titre non limitatif, à condition d'adapter l'unité d'encapsulation au type de gélification que requiert le polymère choisi.

Selon un autre exemple de réalisation de l'invention, cette utilisation consiste à utiliser des première et deuxième(s) phases à appauvrir et à enrichir miscibles deux à deux entre elles et à y générer, en aval de ladite chambre de transfert, un gradient transversal de concentration.

Un procédé d'extraction selon la revendication 11 concerne l'extraction d'éléments de taille millimétrique ou micrométrique, tels que des amas de cellules comme par exemple des îlots de Langerhans, d'une première phase liquide à appauvrir vers au moins une deuxième phase liquide à enrichir miscible ou non avec cette première phase ou avec une phase intermédiaire adjacente, comprend une mise en contact des flux respectifs de ces phases, que l'on force à s'écouler par convection forcée en régime laminaire (de préférence « hyperlaminaire », i.e. avec un nombre de Reynolds inférieur à 1) dans un microcanal d'appauvrissement et au moins un microcanal d'enrichissement gravés dans un substrat d'un système microfluidique, de telle manière que ces flux soient, d'une part, sensiblement parallèles entre eux ou forment un angle aigu en se rejoignant en deux jonctions amont et aval entre ces microcanaux et, d'autre part, demeurent parallèles pendant toute la durée de leur contact mutuel, pour forcer le transfert de ces éléments d'une phase à l'autre exclusivement par fluidique passive.

Selon l'invention, ce procédé est mis en oeuvre dans un système microfluidique selon la revendication 1 et comprend un transfert desdits éléments du microcanal d'appauvrissement vers ledit au moins un microcanal d'enrichissement au moyen de plots s'étendant transversalement à l'axe central dudit microcanal d'appauvrissement, puis une stabilisation d'interface réalisée en aval desdits plots et en amont de ladite jonction aval.

Avantageusement, cette stabilisation d'interface peut être réalisée par un arrangement de piliers qui sont situés à proximité desdits plots et qui sont sensiblement alignés avec ladite jonction aval, ou par un traitement de surface localisé sur une zone de ladite jonction aval tournée vers l'un au moins desdits microcanaux, ce traitement de surface étant par exemple de type lipophile ou hydrophobe.

Selon une autre caractéristique de l'invention, ce procédé peut comprendre en outre l'exercice d'une fonction anti-retour des éléments ayant été séparés de ladite première phase par lesdits plots, cette fonction anti-retour résultant de cette stabilisation ou bien étant exercée séparément de celle-ci.

De manière connue, la taille des îlots de Langerhans peut varier de 20 à 400 µm contre 1 à 10 µm en moyenne pour une cellule, et ces îlots doivent être manipulés avec encore plus de précaution que des cellules uniques à cause de leur fragilité et de leur faible cohésion, ce que permettent d'assurer les systèmes microfluidiques de l'invention.

D'autres avantages, caractéristiques et détails de l'invention ressortiront du complément de description qui va suivre en référence à des dessins annexés, donnés uniquement à titre d'exemples et dans lesquels :
la figure 1 est une vue schématique en coupe transversale d'un système microfluidique selon l'invention dans une première phase de son procédé de fabrication montrant l'oxydation du substrat,
la figure 2 est une vue schématique en coupe transversale du système de la figure 1 dans une seconde phase de son procédé de fabrication montrant l'étalement d'une résine photosensible sur ce substrat oxydé,
la figure 3 est une vue schématique en coupe transversale du système de la figure 2 dans une troisième phase de son procédé de fabrication montrant le résultat d'étapes suivantes de photolithographie et de gravure sèche, permettant de créer les microcanaux,
la figure 4 est une vue schématique en coupe transversale du système de la figure 3 dans une quatrième phase de son procédé de fabrication montrant le résultat d'étapes de gravure profonde,
la figure 5 est une vue schématique en coupe transversale du système de la figure 4 dans une cinquième phase de son procédé de fabrication montrant le résultat d'une étape de délaquage de la résine et de désoxydation par gravure humide,
la figure 6 est une vue schématique en coupe transversale du système de la figure 5 dans une sixième phase de son procédé de fabrication montrant le résultat d'une étape de d'oxydation,
la figure 7 est une vue schématique en coupe transversale du système de la figure 6 dans une septième phase de son procédé de fabrication montrant le résultat d'une étape de scellement d'un capot de protection afin de délimiter la section des microcanaux,
la figure 8 est une vue schématique partielle de dessus d'une unité d'extraction biphasique d'un système microfluidique selon un exemple du premier mode de l'invention, montrant la déviation d'éléments encapsulés pour leur transfert d'une phase à appauvrir à une phase à enrichir,
la figure 8a est une vue schématique partielle de dessus d'une unité d'extraction biphasique d'un système microfluidique selon un autre exemple du premier mode de l'invention, en variante de la figure 8,
la figure 8b est une vue schématique partielle de dessus d'une autre variante de l'unité d'extraction biphasique de la figure 8,
la figure 9 est une vue schématique partielle de dessus d'une unité d'extraction biphasique selon une variante de la figure 8 conforme au premier mode et montrant également la déviation de ces éléments,
la figure 10 est une vue schématique partielle de dessus d'une unité d'extraction biphasique selon une autre variante de la figure 8 conforme au premier mode, montrant les déviations respectives de deux catégories de taille de ces éléments,
la figure 11 est une vue schématique partielle de dessus montrant un exemple dimensionnel d'une jonction amont à deux entrées d'une unité d'extraction selon les figures 8 à 10,
la figure 12 est une vue schématique partielle de dessus montrant un exemple dimensionnel d'une jonction aval à deux entrées d'une unité d'extraction selon les figures 8 à 10,
la figure 13 est une vue schématique partielle de dessus d'une unité d'extraction biphasique selon une autre variante de la figure 8 conforme au premier mode, montrant une déviation progressive de ces éléments,
la figure 14 est une vue schématique partielle de dessus d'une unité d'extraction montrant une déviation par un déflecteur de ces éléments,
la figure 14a est une vue schématique partielle de dessus d'une unité d'extraction biphasique selon une variante de la figure 14 où le déflecteur est couplé aux moyens de déviation des figures 8 à 12,
la figure 15 est une vue schématique partielle de dessus d'une unité d'extraction biphasique selon un exemple du second mode de l'invention, montrant une canalisation sans déviation de ces éléments pour leur transfert d'une phase à appauvrir à une phase à enrichir en ces éléments,
la figure 16 est une vue schématique partielle de dessus d'une unité d'extraction triphasique selon un exemple du premier mode de l'invention, montrant la déviation d'éléments pour leur transfert successif à deux phases respectivement intermédiaire puis à enrichir en ces éléments,
la figure 17 est une vue schématique partielle de dessus d'une unité d'extraction triphasique selon une variante de la figure 16 conforme au premier mode, montrant les déviations respectives de deux catégories de taille de ces éléments dans les deux autres phases,
la figure 18 est une vue schématique partielle de dessus d'un système microfluidique selon l'invention dont l'unité d'extraction est selon la figure 8 et est couplée en amont à un module de pré-gélification de capsules et en aval à un module d'encapsulation supplémentaire pour l'obtention d'une double encapsulation des éléments extraits,
la figure 19 est une vue schématique partielle de dessus d'un système microfluidique selon une variante de la figure 18 qui se différencie uniquement de cette dernière en ce que l'unité d'extraction couplée à ces modules utilise quatre phases pour l'obtention finale d'une capsule à trois couches,
la figure 19a est une vue schématique partielle de dessus d'un système microfluidique selon une variante de la figure 19 mettant en oeuvre des unités d'extraction en série selon le principe de la figure 15,
la figure 20 est une vue schématique en coupe diamétrale d'une capsule gélifiée obtenue par un système selon les figures 18 ou 19, montrant le centrage de chaque élément obtenu dans cette capsule,
la figure 21 est un cliché montrant partiellement en vue de dessus une unité d'extraction biphasique à déflecteur conforme au premier mode de l'invention selon une variante des figures 8 et 14 combinées, les éléments déviés n'étant pas visibles,
la figure 22 est une vue schématique de dessus d'un exemple de moyens de transfert et de moyens de stabilisation et anti-retour utilisables dans une unité d'extraction du type de celle de la figure 8,
la figure 23 est une vue schématique de dessus d'un autre exemple de moyens de transfert et de stabilisation/ anti-retour utilisables dans une unité d'extraction à déflecteur du type de celle de la figure 21,
la figure 24 est une vue schématique de dessus d'un autre exemple de moyens de transfert et de stabilisation/ anti-retour utilisables dans une unité d'extraction du type de celle de la figure 21 mais à déflecteur plus grand,
la figure 25 est un cliché montrant partiellement en vue de dessus une unité d'extraction biphasique conforme au premier mode de l'invention selon une variante de la figure 21 mais sans déflecteur, les éléments déviés n'étant pas visibles,
la figure 26 est un cliché montrant globalement en vue de dessus un système microfluidique selon l'invention dont l'unité d'extraction pour la gélification de capsules est couplée en amont à une unité d'encapsulation des éléments à extraire, et en aval à un serpentin pour régler les pressions et les vitesses respectives des deux phases à appauvrir et à enrichir,
la figure 27 est un cliché montrant localement en vue de dessus et à plus grande échelle le serpentin de la figure 26 couplé à l'unité d'extraction,
la figure 28 est un cliché montrant localement en vue de dessus et à plus grande échelle l'unité d'encapsulation de la figure 26,
la figure 29 est un cliché montrant localement en vue de dessus et à plus grande échelle l'unité d'extraction de la figure 26 couplée au serpentin, et
la figure 30 est un cliché montrant localement en vue de dessus et encore à une plus grande échelle l'unité d'extraction de la figure 29, laquelle est du type de la figure 22.

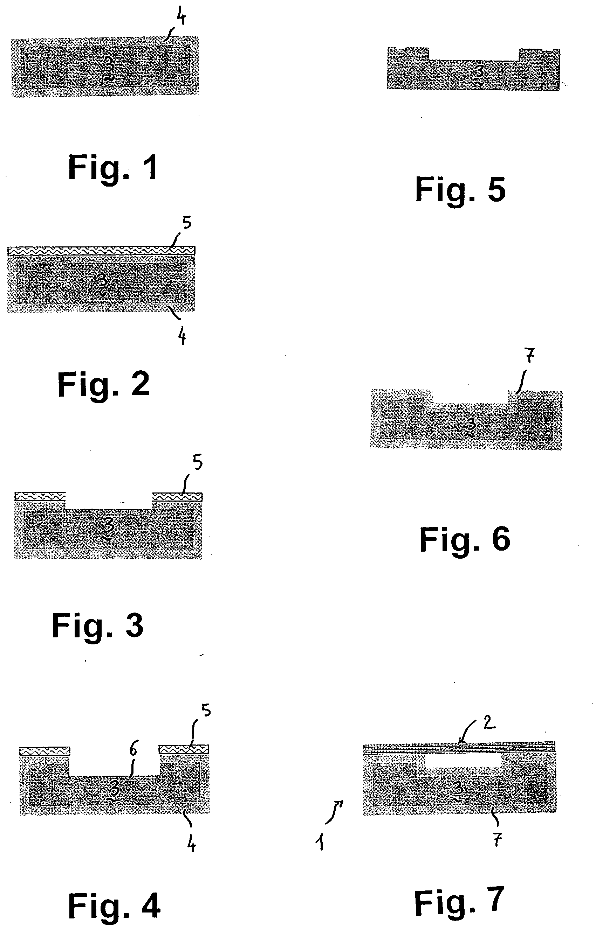

Un système microfluidique 1 selon l'invention peut par exemple être réalisé comme suit, en référence aux figures 1 à 7 qui rendent compte de diverses étapes se basant sur des procédés connus de microélectronique sur silicium, i.e. notamment la lithographie, la gravure profonde, l'oxydation, le « stripping » et le scellement d'un capot de protection 2 sur le substrat 3. Cette technologie sur silicium présente l'avantage d'être très précise (de l'ordre du micromètre) et non limitative tant dans les profondeurs de gravure qu'au niveau des largeurs des motifs. Plus précisément, le protocole de réalisation du microsystème 1 est le suivant :
Un dépôt d'oxyde de silicium 4 (figure 1) est effectué sur le substrat de silicium. Puis une résine photosensible 5 est déposée par étalement en face avant (figure 2), suite à quoi l'oxyde de silicium 4 est gravé à travers la couche de résine 5 par photolithographie et gravure sèche de l'oxyde de silicium 4 en s'arrêtant sur le substrat 3 de silicium (figure 3).

Ce substrat 3 est ensuite gravé à la profondeur souhaitée des microcanaux par une gravure profonde 6 (figure 4), puis la résine est « délaquée » (figure 5). L'oxyde de silicium 4 thermique restant est ensuite éliminé par désoxydation au moyen d'une gravure humide (figure 5), puis une nouvelle couche d'oxyde thermique 7 est déposée (figure 6).

Les puces obtenues sont ensuite découpées et un capot de protection 2 en verre - ou en un autre matériau transparent pour permettre l'observation - est scellé, par exemple par scellement anodique ou scellement direct (figure 7).

Avant montage des microcanaux ou capillaires (non illustrés), un traitement de surface du type silanisation hydrophobe peut aussi être effectué.

Le protocole décrit ci-dessus est l'un des multiples protocoles de fabrication pouvant être suivis. Par ailleurs, on pourrait utiliser pour le substrat 3 un matériau autre que le silicium, par exemple un PDMS (polydiméthylsiloxane) ou bien un autre élastomère, par moulage sur un « master » (i.e. matrice) préalablement préparé par photolithographie par exemple.

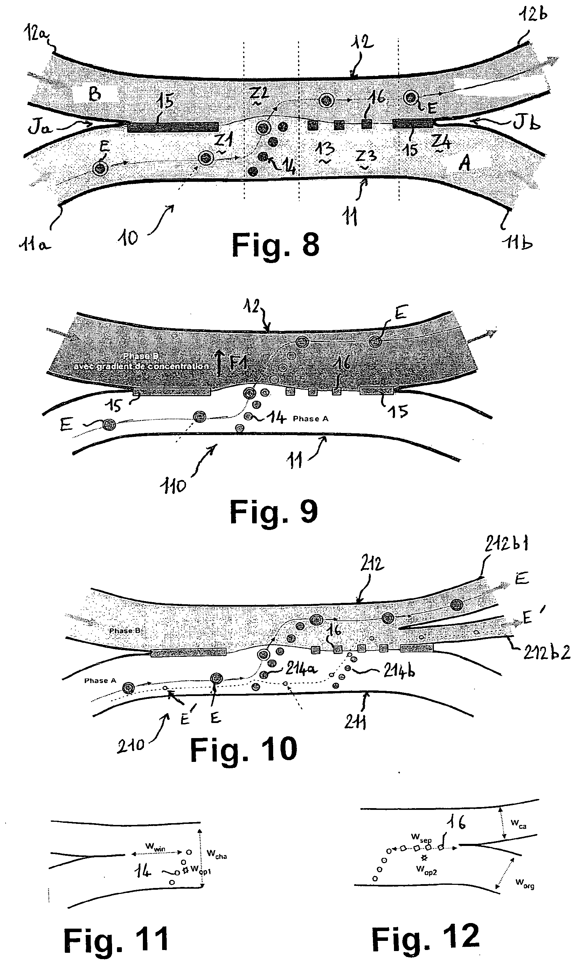

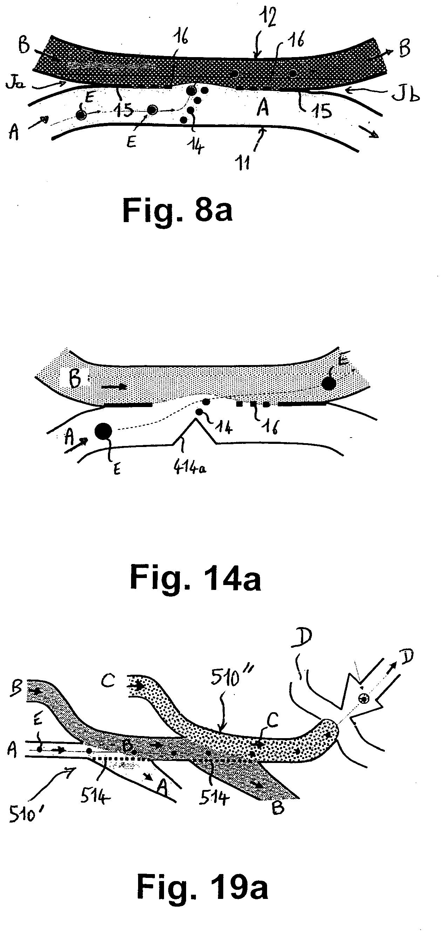

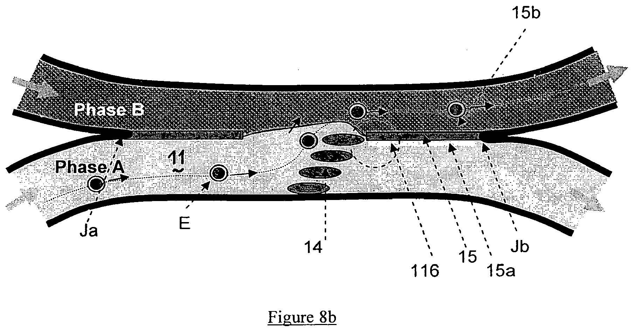

L'unité d'extraction 10 de la figure 8 comporte deux microcanaux respectivement d'appauvrissement 11 et d'enrichissement 12 qui sont juxtaposés de manière sensiblement parallèles sur le substrat 3 et dans lesquels sont destinées à circuler uniquement par convection forcée deux phases liquides à appauvrir A et à enrichir B en éléments E à extraire qui sont, de préférence, choisies immiscibles entre elles (ces phases A et B étant respectivement huileuse et aqueuse dans le cas préférentiel de l'utilisation de l'unité 10 pour gélifier des capsules polymériques enrobant les éléments E). Le microcanal 11 présente une entrée 11a et une sortie 11b, et le microcanal 12 une entrée 12a et une sortie 12b qui forment respectivement avec 11a et 11b une jonction amont Ja et une jonction aval Jb toutes deux en pattes-d'oie (i.e. en formant un V aux branches rapprochées selon un angle aigu très faible et légèrement évasées vers l'extérieur). Les microcanaux 11 et 12 sont réunis entre eux entre ces jonctions Ja et Jb en formant une chambre de transfert 13 qui est conçue pour réaliser le contact entre les phases A et B circulant en régime « hyperlaminaire » (nombre de Reynolds inférieur à 1) de sorte à transférer par des moyens exclusivement hydrodynamiques 14 localisés dans cette chambre 13, des éléments E tels que des amas de cellules encapsulés dans cet exemple de réalisation, via une déviation de ces éléments du microcanal 11 au microcanal 12.

Il résulte de ces jonctions Ja et Jb en pattes-d'oie que les flux des phases A et B convergent au contact l'une de l'autre en aval de Ja et divergent l'une de l'autre en amont de Jb suivant des directions à chaque fois sensiblement parallèles, à l'instar des flux de ces phases A et B dans la chambre de transfert 13 qui sont prévus pour demeurer parallèles entre eux lors de leur circulation au contact l'un de l'autre. Les phases A et B circulent, de préférence, dans le même sens.

Afin d'optimiser encore ce parallélisme des flux dans la chambre 13, on prévoit d'adjoindre une cloison séparatrice 15 imperméable aux phases A et B au point de raccordement interne de chaque jonction Ja, Jb, de telle manière que cette cloison 15 soit sensiblement centrée sur la bissectrice de cette jonction Ja, Jb du côté intérieur de cette dernière (i.e. sur la face interne de la paroi de celle-ci). En d'autres termes, ces deux cloisons 15 sont dirigées l'une vers l'autre en étant sensiblement alignées l'une avec l'autre et avec l'interface de contact entre phases A et B dans la chambre 13.

Comme visible à la figure 8a, la cloison 15 de la jonction amont Ja peut être prolongée par une rangée de piliers de séparation 16 alignés selon l'axe de cette cloison 15. On notera qu'en variante cette cloison amont 15 pourrait être remplacée par de tels piliers 16 alignés selon l'axe de la bissectrice de cette jonction amont Ja.

Comme visible à la figure 8, on peut distinguer essentiellement dans l'unité d'extraction 10 :
- une zone Z1 initiant le contact entre les phases A et B ;
- une zone Z2 qui est située dans la chambre 13 et dans laquelle se trouvent les moyens de transfert par déviation 14 formés dans cet exemple d'une rangée de plots régulièrement espacés (de préférence cylindriques pour ne pas altérer les éléments E), ces plots 14 s'étendant en travers de la section de passage du microcanal 11 et quasiment jusqu'à l'interface entre les phases A et B (i.e. jusqu'à la zone de réunion des microcanaux 11 et 12) selon un angle de 45° environ avec la direction de ce microcanal 11, de sorte à s'opposer au passage des éléments E en les déviant vers le microcanal 12 ;

- une zone Z3 comprenant une rangée de piliers 16 parallèle à l'écoulement des phases A et B et de préférence de section polygonale (par exemple carrée), ces piliers 16 étant conçus pour stabiliser l'interface entre les phases A et B et pour éviter que les éléments ayant migré dans la phase B ne retournent dans la phase A (l'espacement entre piliers 16 étant choisi inférieur au diamètre des éléments E); et
- une zone Z4 qui permet l'évacuation des phases A et B via les deux sorties indépendantes 11b et 12b permettant la séparation de la phase A appauvrie ou dépourvue d'éléments E et de la phase B enrichie en ces derniers.

On notera qu'il serait possible d'ajouter une troisième sortie positionnée à l'interface des deux phases A et B, qui serait destinée à collecter un mélange de celles-ci exempt des éléments E.

On notera également que la rangée unique de plots 14 permet la déviation d'éléments E « monodispersés » (i.e. sensiblement de même taille) sans entraver l'écoulement de la phase A, et que l'espacement entre plots 14 est donc inférieur au diamètre des éléments E. Ainsi, une rangée de plots 14 agit selon un filtre, c'est-à-dire qu'elle bloque, dans la direction d'écoulement de la phase A, le passage des éléments dont la taille dépasse la maille du filtre, cette maille étant ici définie par l'espacement entre deux plots 14 consécutifs. Quant à l'angle précité de la rangée de plots 14, il est fonction de la vitesse de l'écoulement et peut donc varier dans une large mesure de 30 à 85° par exemple, étant réduit pour des vitesses relativement élevées afin d'éviter ou de minimiser l'impact des éléments E sur ces plots 14.

On notera en outre que si l'espacement entre les piliers 16 assurant les fonctions anti-retour et de stabilisation de l'interface est choisi suffisamment faible, alors cette stabilisation peut se faire sur une distance non négligeable par rapport aux dimensions de l'unité 10. Selon ce mode de réalisation, les piliers 16 constituent à la fois un moyen de stabilisation de l'interface et un moyen anti-retour.

Comme illustré sur la figure 8b, les moyens de stabilisation d'interface peuvent consister en un traitement de surface appliqué à la paroi interne d'un microcanal, au niveau de la jonction aval Jb. Sur l'exemple représenté sur la figure 8b, le traitement de surface est appliqué sur une partie de la cloison séparatrice 15 et permet de rendre cette partie mouillable à la phase liquide la contactant. Sur l'exemple représenté, la phase A est organique, tandis que la phase B est aqueuse. Le moyen de stabilisation de l'interface est alors un traitement de surface, appliqué sur une face 15a de cette cloison 15 délimitant (i.e. tournée vers) le microcanal d'appauvrissement 11 (lequel comporte des plots de déviation 14). Ce traitement est ici un traitement permettant de rendre cette partie 15a lipophile, ou hydrophobe, de telle sorte que cette partie 15a soit mouillable par la phase organique A. Un tel traitement peut par exemple consister à déposer un matériau lipophile ou hydrophobe, par exemple par une silanisation, sur la partie 15a.

De façon alternative, ou simultanée, un traitement peut être appliqué à la face 15b de la cloison séparatrice 15 délimitant (i.e. tournée vers) le microcanal d'enrichissement 12 au niveau de la jonction Jb. Ce dernier traitement, rendant hydrophile la surface de cette partie 15b, peut consister à fixer un matériau hydrophile (e.g. SiO₂, ou silane hydrophile) sur cette surface.

Ainsi, une cloison 15 rendue mouillable à la phase liquide A ou B circulant dans le microcanal 11 ou 12 délimité par ladite cloison 15, peut constituer un moyen de stabilisation d'interface. Placée de façon adjacente aux plots 14 de transfert des particules, une telle cloison 15 forme également un moyen anti-retour vis-à-vis des éléments E transférés.

Comme illustré à la figure 9, une unité d'extraction 110 selon l'invention peut avantageusement utiliser un gradient transverse de concentration (voir flèche F1) dans la phase B, la rangée de plots 14 s'étendant alors transversalement du microcanal 11 au microcanal 12 de manière à ce que les éléments E, une fois transférés dans la phase B, traversent ce gradient de concentration. Dans le cas où la gélification mise en oeuvre par ce transfert est rapide, ce procédé peut limiter le gonflement des capsules polymériques enrobant les éléments E. On peut en variante utiliser un double gradient de concentration, pour réaliser un enrobage chimique sophistiqué de chaque capsule.

Comme illustré à la figure 10 qui concerne le cas d'une population d'éléments E « polydispersés » (i.e. présentant diverses catégories de tailles), une unité d'extraction 210 selon l'invention peut comporter au moins deux rangées obliques de plots 214a et 214b sensiblement parallèles, la rangée de plots 214a de plus grand diamètre étant placée en amont et s'étendant à la fois dans les microcanaux d'appauvrissement 211 et d'enrichissement 212 pour dévier uniquement les plus gros éléments E vers une zone distale (i.e. supérieure sur la figure) du microcanal 212 et être ensuite guidés vers une sortie distale en regard 212b1 de celui-ci, alors que les autres éléments E' plus petits passent à travers cette rangée 214a et sont déviées à leur tour par la rangée 214b en aval de la précédente et ne s'étendant qu'à travers le microcanal 211. Ces éléments E' rejoignent ensuite la phase B en aval des éléments E, dans une zone proximale du microcanal 212 (i.e. inférieure sur la figure) et sont canalisées vers une sortie proximale en regard 212b2 de celui-ci. Les plots 214a et 214b peuvent également avoir des diamètres similaires. Dans ce cas, l'espacement entre deux plots 214a consécutifs est plus grand que celui entre deux plots 214b consécutifs.

Les figures 11 et 12 recensent, à titre indicatif et nullement limitatif, des valeurs dimensionnelles utilisables pour réaliser une unité d'extraction 10 telle que celle de la figure 8.

En premier lieu, les largeurs transversales respectives W_{ca} et W_{org} des microcanaux 11 et 12 à proximité de chaque jonction Ja, Jb peuvent être identiques ou similaires, étant précisé que ces largeurs peuvent varier de 1,2 φ à 10 φ environ, où φ est le diamètre moyen des éléments E à extraire et que la largeur transversale de la chambre de transfert 13 est par exemple égale à la somme W_{ca} + W_{org}.

De plus, la distance axiale W_{win} entre l'extrémité interne de la jonction amont Ja (formée par exemple par celle de la cloison 15 la prolongeant) et le dernier des plots de déviation 14 dans la rangée correspondante (situé sensiblement en regard de cette extrémité de jonction Ja) peut être comprise entre 1,5 φ et 50 φ environ. Quant à la distance axiale Wₛₑₚ entre l'extrémité interne de la jonction aval Jb (formée par exemple par celle de la cloison 15 la prolongeant) et ce même dernier plot 14, elle peut être comprise entre 1,5 φ et 20 φ environ

Concernant la ou chaque rangée de plots 14, 214a, 214b visible aux figures 8 à 10, l'espacement entre plots peut varier de φ / 5 à φ / 2 environ, le diamètre de chaque plot pouvant être compris entre φ /10 et φ/5. Il en est de même pour l'espacement entre les piliers 16 et leur diamètre.

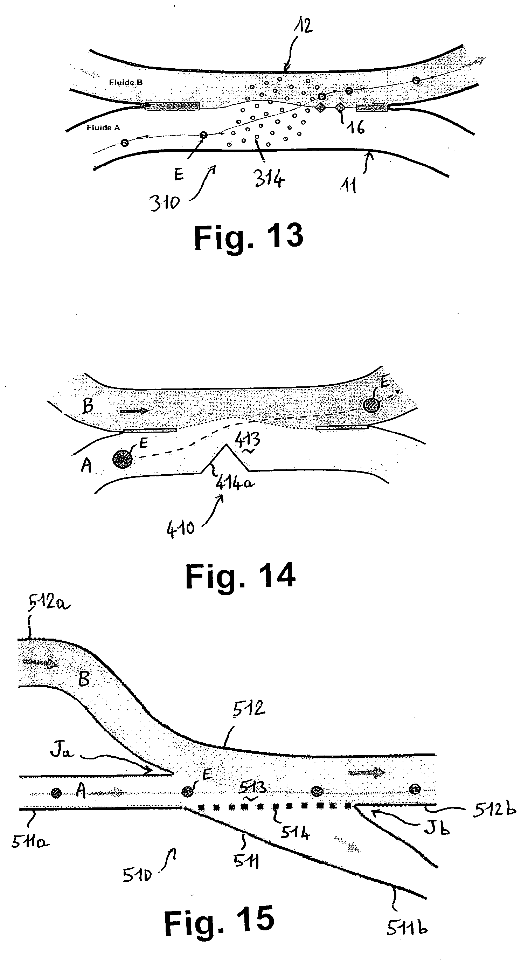

Dans la variante de la figure 13, l'unité d'extraction 310 se distingue essentiellement de celle de la figure 8, en ce que les moyens de transfert des éléments E qui les dévient de la phase A à la phase B sont constitués de rangées obliques de plots 314 qui sont disposées transversalement aux microcanaux 11 et 12 et qui sont conçues pour l'obtention d'un déplacement latéral déterministe (« DLD ») laissant passer les éléments E en les déviant progressivement à chaque passage d'une rangée à la rangée suivante, du fait que l'espacement entre ces plots est supérieur au diamètre des éléments E. Les plots 314 sont arrangés de telle sorte que les lignes d'écoulement des éléments E à dévier se dirigent peu à peu vers l'interface entre les deux phases A et B. Ainsi, les éléments E à séparer suivent leurs lignes d'écoulement et migrent progressivement vers l'interface. Un arrangement de ce type ne constitue pas un filtre pour les éléments à dévier, mais plutôt un moyen de déviation progressif. Selon cette variante, on utilise préférentiellement deux phases A et B immiscibles. Toujours selon cette variante, des moyens 16 de stabilisation de l'interface et d'anti-retour sont disposés en aval des moyens de transfert 314.

Dans la figure 14, les moyens de transfert déviant les éléments E de la phase A à la phase B au sein de la chambre 413 de l'unité d'extraction 410 sont constitués d'un déflecteur 414a. Les éléments E sont adsorbés au contact de cette phase B, dans le cas où les forces capillaires sont suffisantes. On remarque néanmoins que le transfert est moins efficace, car l'adsorption des éléments E par la phase B vers laquelle ils sont déviés peut ne pas avoir lieu de manière satisfaisante.

Comme illustré à la figure 14a qui est une variante de la figure 14, on a adjoint au déflecteur 414a, d'une part, des plots de déviation 14 le prolongeant de manière oblique sensiblement jusqu'à l'interface entre les phases A et B et, d'autre part, des piliers 16 de stabilisation/ anti-retour. Les plots de déviation 14 sont arrangés de façon à constituer un filtre bloquant le passage des éléments E à dévier dans la direction d'écoulement du fluide appauvri (fluide s'écoulant dans le microcanal d'appauvrissement). On notera qu'avec ces piliers 16, on obtient un transfert plus efficace que celui procuré par l'unité 410 de la figure 14 qui est dépourvue de tels piliers 16 et dans laquelle les éléments adsorbés dans la phase B peuvent revenir dans la phase A.

Dans l'exemple de la figure 15, l'unité d'extraction 510 selon le second mode de l'invention a toujours ses microcanaux d'appauvrissement et d'enrichissement 511 et 512 qui ont leurs jonctions amont Ja et aval Jb en forme de pattes-d'oie, mais le transfert des éléments E de la phase A à la phase B est ici réalisé sans la moindre déviation de ces éléments E. En effet, un alignement de piliers 514 régulièrement espacés de préférence sur toute la longueur la chambre de transfert 513 en aval de la jonction amont Ja et qui s'étend jusqu'à la jonction aval Jb dans le prolongement des parois latérales de l'entrée 511a du microcanal 511 et de la sortie 512b du microcanal 512 (l'entrée 511a et la sortie 512b étant prévues sensiblement coaxiales), est conçu pour canaliser les éléments E quasiment en ligne droite de cette entrée 511a de la phase A à appauvrir à cette sortie 512b de la phase B à enrichir. Cet alignement de piliers 514 s'étend ainsi parallèlement à la direction suivie par les éléments E.

On notera que dans ce second mode de l'invention, on évite les chocs des éléments E sur les piliers 514, ce qui est particulièrement important pour l'extraction d'éléments fragiles tels que des amas de cellules peu cohésifs comme les îlots de Langerhans.

Comme visible à cette figure 15, on notera également que l'interface entre les phases A et B a tendance à « s'appuyer » sur les derniers piliers 514 situés les plus en aval de la chambre 513, i.e. à proximité immédiate de la jonction Jb. Autrement dit, ces piliers 514 constituent un moyen de stabilisation de l'interface. Et comme les piliers 514 sont également conçus pour empêcher le passage des éléments E dans la sortie 511b du microcanal 511, leur alignement sur toute la longueur de la chambre 513 le long de l'axe d'écoulement de la phase A est préférentiel dans ce but. Ainsi, les piliers 514 sur lesquels d'appuie l'interface entre les phases A et B constituent également des moyens de stabilisation d'interface et d'anti-retour.

Selon ce second mode de réalisation, la rangée de piliers 514 s'étend transversalement à la direction d'écoulement de la phase A. Elle constitue un filtre pour les éléments E à séparer, dans le sens où elle bloque leur passage selon la direction d'écoulement de la phase A dans le microcanal d'appauvrissement 511. On comprendra alors que selon ce mode de réalisation, cette rangée de piliers 514 constitue à la fois un moyen de transfert et un moyen de stabilisation d'interface et anti-retour.

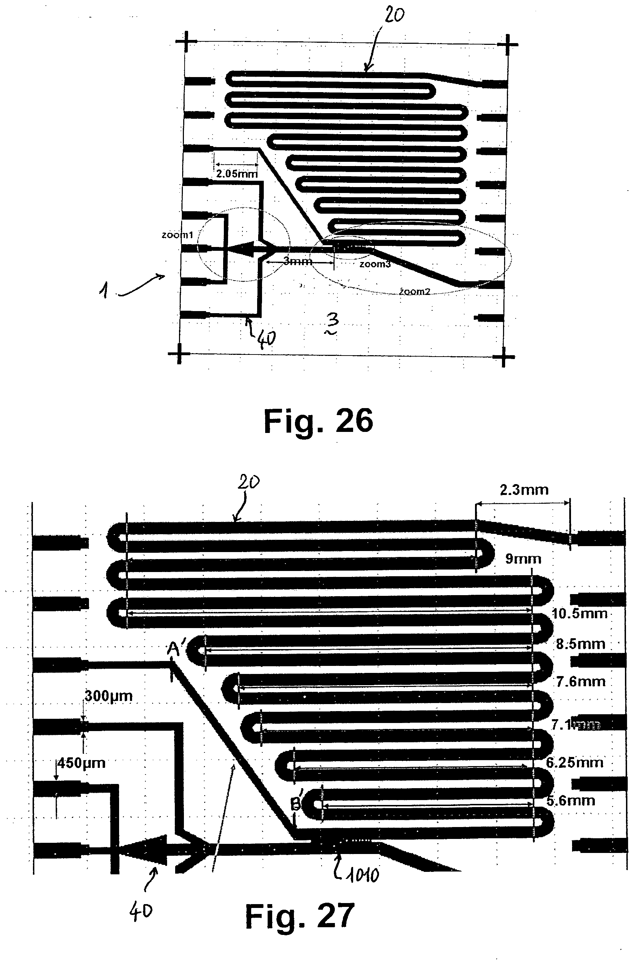

Egalement à titre préférentiel, pour éviter que la phase A ne se mélange avec la phase B, on fait en sorte de maintenir pendant l'extraction une pression dans celle-ci légèrement plus élevée que celle dans la phase A, par exemple au moyen du serpentin 20 illustré aux figures 26 et 27 (ou d'un autre moyen apte à réduite les pertes de charge, par exemple en réduisant la section du canal). On évite ainsi que des gouttelettes de phase A se retrouvent dans la phase B, étant précisé que l'on peut à l'inverse accepter la formation de gouttelettes de phase B dans la phase A. On notera que ce moyen 20 de réduction des pertes de charge permet non seulement d'ajuster les pressions des phases A et B, mais encore de maintenir leurs vitesses respectives sensiblement voisines l'une de l'autre au niveau de la chambre de transfert, évitant ainsi d'avoir des forces de cisaillement trop importantes sur les éléments transférés d'une phase à une autre.

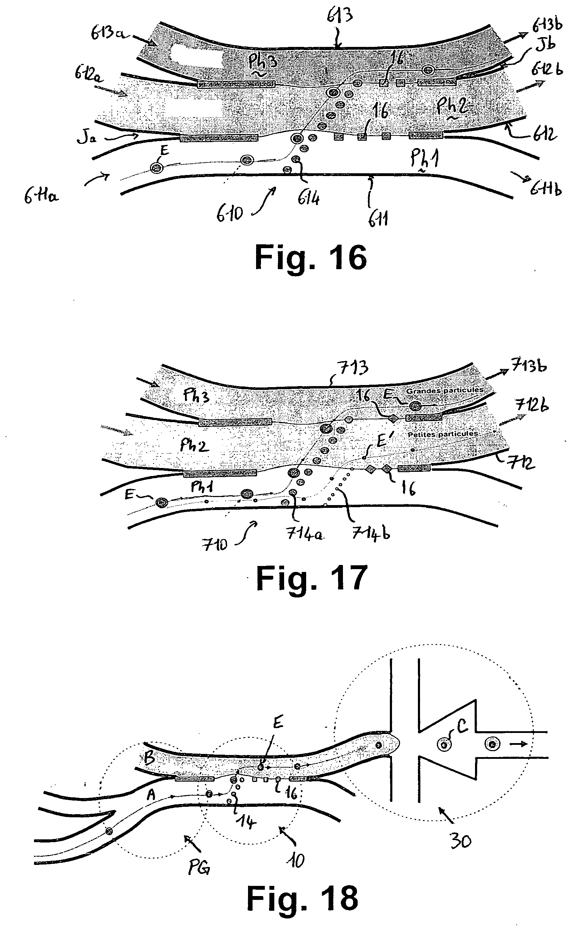

Comme illustré à la figure 16, une unité d'extraction 610 selon l'invention peut utiliser plus de deux phases différentes Ph1 à Ph3, qui circulent dans des microcanaux parallèles 611, 612 et 613 définissant trois entrées 611a à 613a, trois sorties 611b à 613b, deux jonctions amont Ja et deux jonctions aval Jb. L'extension de la rangée oblique de plots de déviation 614, qui est formée en travers du microcanal d'appauvrissement 611, du microcanal intermédiaire 612 et qui se termine à la réunion de 612 avec le microcanal d'enrichissement 613 (i.e. à l'interface entre les phases 2 et 3), force les éléments E à passer dans la phase 2 puis dans la phase 3. Ce passage dans la phase 2 peut par exemple permettre de modifier chimiquement ou biologiquement la surface des capsules enrobant ces éléments E, avant de gélifier complètement ces capsules par la phase 3. On utilise préférentiellement pour cette unité 610 une phase 1 qui est immiscible avec une phase 2, alors que les phases 2 et 3 peuvent être miscibles entre elles suivant l'application envisagée.

Comme illustré à la figure 17, lorsque l'on est en présence de deux ou plus de deux catégories de taille d'éléments E, E', il est possible d'utiliser dans l'unité d'extraction 710 plusieurs rangées de plots 714a et 714b à l'instar de la figure 10, et trois ou plus de trois phases liquides immiscibles Ph1 à Ph3. Les rangées de plots 714a et 714b constituent des filtres respectivement pour les éléments E et E'. En effet, elles bloquent le passage de ces éléments E et E' selon la direction d'écoulement de leurs microcanaux respectifs. On voit sur cette figure 17 que les éléments E' de plus petite taille se retrouvent dans la phase 2 et en sortent (via la sortie 712b du microcanal intermédiaire 712) après avoir traversé la rangée amont 714a et avoir été déviés par la rangée aval 714b, alors que les éléments E de plus grosse taille sont déviés par la rangée amont 714a pour aboutir directement à la phase 3 et en sortir (via la sortie 713b du microcanal d'enrichissement 713). On remarquera, dans les modes de réalisation décrits dans les figures 16 et 17, que des piliers 16 constituent à la fois des moyens de stabilisation d'interface (notamment lorsque deux phases s'écoulant dans deux microcanaux adjacents sont immiscibles) et des moyens anti-retour.

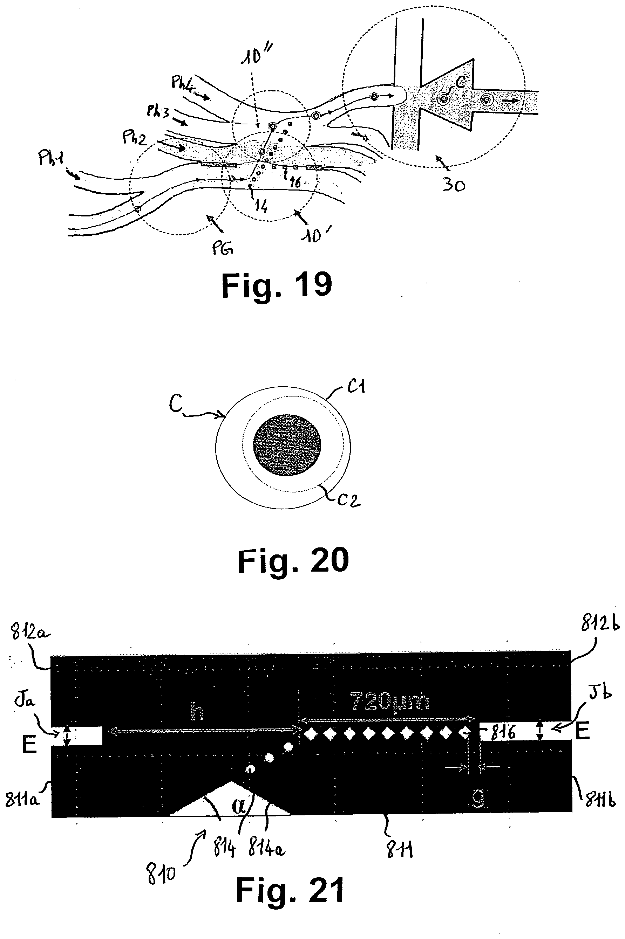

Les figures 18 et 19 illustrent, en relation avec la gélification de capsules enrobant les éléments E à extraire, tels que des amas de cellules, les deux étapes de pré-gélification respectivement mises en oeuvre dans une phase organique (phase A) puis de gélification par transfert dans une phase aqueuse (phase B) comme exposé ci-dessus en référence aux figures 8 à 15.

La pré-gélification peut être obtenue par contact avec :
- des nanocristaux de polyions permettant la gélification de la capsule polymérique (qui est typiquement en alginate ou similaire), ces nanocristaux pouvant être par exemple de l'acétate de calcium, du chlorure de calcium, du titanate de baryum, du phosphate de calcium ou du chlorure de baryum, pas forcément miscibles avec la phase organique continue (e.g. à base d'huile ou de solvants perfluorés), ou avec
- des nano-émulsions contenant des polyions permettant la gélification.

Au contact de ces polyions, la pré-gélification se produit et l'enveloppe externe des capsules réticule sur une très faible épaisseur, suffisante pour rigidifier sa surface et maintenir la forme sphérique de la capsule.

Les avantages de la pré-gélification sont très nombreux, étant notamment précisé qu'elle permet de conserver la forme sphérique pour les capsules, de les maintenir dans des conditions physiologiques, d'automatiser l'encapsulation et la gélification, de faire des encapsulations multicouches et enfin d'éliminer les gouttelettes « satellites ». Ces dernières seront en fait éliminées en aval de la pré-gélification, car elles vont suivre le flux dans le canal d'appauvrissement et passer dans l'espace inter-plots 14 faisant office de filtre du fait de la taille réduite de ces gouttelettes « satellites ».

Comme visible aux figures 18 et 19, le module de pré-gélification PG est couplé en amont à l'unité d'extraction 10 de la figure 8, laquelle est avantageusement couplée en aval à un module optionnel d'encapsulation supplémentaire 30. Une fois les capsules pré-gélifiées via le module PG dans leur fluide porteur (phase huileuse A), elles entrent dans l'unité 10 et sont transférés par la rangée de plots 14 dans une seconde phase B immiscible (aqueuse). Là encore, des moyens de stabilisation d'interface et des moyens anti-retour 16 peuvent être disposés. Dans cet exemple, ces moyens se présentent sous la forme de piliers 16 assurant ces deux fonctions à la fois. Lorsque des ions calcium (ou autre polyions permettant la gélification), sont ajoutés à cette phase B, une réticulation complète de l'enrobage d'alginate a lieu pour l'obtention d'une capsule stable.

On notera toutefois que dans le cas où la phase immiscible B ne contient pas de polyions gélifiants, il est alors possible de former des capsules à coeur liquide qui, bien que moins utilisées actuellement, présentent l'avantage de laisser de l'espace aux cellules qui ont été encapsulées et qui se divisent.

On notera en outre que le système microfluidique selon l'invention permet de réaliser la gélification à pH neutre et ainsi de maximiser la viabilité des cellules, alors que cela n'est possible pour des encapsulations dans des capsules au coeur liquide par les méthodes classiques dans lesquelles ces capsules sont dans un premier temps gélifiées puis ont leur coeur dissous par des agents de type citrate ou EDTA.

Le module d'encapsulation supplémentaire 30 illustré à ces figures 18 et 19 est destiné à procurer une encapsulation de qualité optimale, via un double enrobage. Ce module 30, par exemple de type « MFFD » (« Micro Flow Focusing Device » en anglais pour dispositif microfluidique focalisant l'écoulement) est couplé à la phase aqueuse B contenant les capsules par exemple d'alginate en solution. On obtient ainsi une capsule multicouches C avec deux enrobages C1 et C2 qui peuvent être différents (alginates de concentration différente par exemple, ou bien alginate/PLL où PLL est la poly-L-Lysine), et avec un centrage amélioré de chaque élément dans la capsule C (e.g. amas de cellules) comme visible à la figure 20 du fait que la probabilité d'avoir deux décentrages d'un même côté est faible.

Une telle configuration minimise la probabilité d'apparition de protrusions lors de la gélification des capsules, une protrusion désignant une partie de l'élément encapsulé non recouverte ou très finement recouverte de la coque polymérique. L'obtention de capsules gélifiées ne présentant pas de protrusion est particulièrement importante lorsque l'élément encapsulé est destiné à être implanté dans un corps vivant, afin d'éviter toute réaction immunitaire, une telle réaction pouvant avoir pour conséquence un rejet de la greffe.

Comme visible à la figure 19, on peut également réaliser une multi-encapsulation en augmentant le nombre d'étages d'encapsulation et de gélification (mise en oeuvre par une extraction à deux étages 10', 10"), comme par exemple une encapsulation alginate /PLL / alginate. On utilise à cet effet quatre phases Ph1 à Ph4, avec de préférence :
- Ph1 : phase organique + nanocristaux de calcium,
- Ph2 : phase aqueuse + calcium,
- Ph3 : phase aqueuse + PLL, et
- Ph4 : phase aqueuse + alginate.

Dans cet exemple, les phases aqueuses Ph2 à Ph4 sont miscibles entre elles, alors que la seule phase organique Ph1 n'est pas miscible avec les trois autres. Des moyens de stabilisation d'interface constitués de piliers 16 sont prévus entre les plots de transfert 14 et la jonction aval des microcanaux dans lesquels circulent les phases 1 et 2, ces phases étant immiscibles.

Dans la variante de la figure 19a, on réalise une multi-encapsulation en agençant en série plusieurs unités d'extraction sans déviation 510' et 510", qui sont chacune du type de celle de la figure 15. Comme visible sur cette figure, la première unité d'extraction 510' est conçue, via les piliers 514, pour canaliser en ligne droite les éléments E sous forme de gouttelettes contenant des cellules véhiculées par la phase A à appauvrir, vers la sortie de la phase B à enrichir qui réalise une gélification de ces gouttelettes, et la seconde unité d'extraction 510" est conçue, via des piliers 514 analogues, pour canaliser les gouttelettes gélifiées dans la phase B vers la sortie d'une troisième phase C contenant un nouvel encapsulant. Ces gouttelettes gélifiées et encapsulées sont ensuite en contact avec une quatrième phase D (nouvelle phase porteuse) pour l'obtention en sortie d'une double encapsulation des gouttelettes.

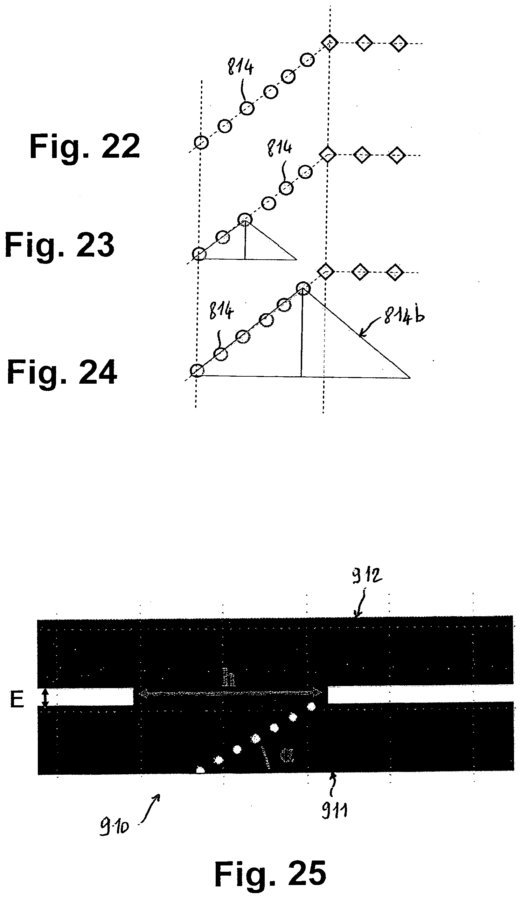

L'unité d'extraction 810 de la figure 21 (dont une partie est schématisée à la figure 23) est telle que la jonction amont Ja et la jonction aval Jb présentent chacune en vue de dessus une forme de U, l'unité 810 présentant alors une forme de H dont la barre transversale élargie forme la chambre de transfert et dont les jambages forment les entrées 811a, 812a et sorties 811b, 812b. La rangée oblique de plots cylindriques de déviation 814 (de diamètre égal à 40 µm) est combinée à un déflecteur interne 814a de section triangulaire formé sur la paroi latérale externe du microcanal d'appauvrissement 811 et dont la rampe, qui forme un angle α par exemple de 30° avec cette paroi, se prolonge dans la même direction par les plots 814. A titre indicatif, les dimensions illustrées h, E et g dans cet exemple sont respectivement de 800 µm, 80 µm et 40 µm. Quant aux piliers 816 en forme de losanges destinés à la stabilisation de l'interface et à l'anti-retour des éléments, ils présentent une diagonale de 40 µm. Les valeurs données à titre d'exemple ont été calculées pour un dispositif de profondeur 200 µm.

Les variantes des figures 22 et 24 illustrent respectivement la rangée de plots de déviation 814 dépourvue de déflecteur en amont, et pourvue d'un déflecteur 814b analogue à celui des figures 21 et 23 mais dont la hauteur transversale est bien plus élevée, étant presque ou aussi importante que la largeur du microcanal d'appauvrissement 811.

L'unité d'extraction 910 de la figure 25 se différencie uniquement de celle de la figure 21, en ce qu'il est dépourvu de l'alignement de piliers de stabilisation de l'interface et d'anti-retour des éléments. En effet, on voit que les moyens de transfert de ces derniers sont exclusivement constitués ici d'une rangée oblique de plots cylindriques s'étendant de la paroi latérale externe du microcanal d'appauvrissement 911 à la jonction aval Jb, de sorte à dévier ces éléments vers le microcanal 912. L'angle α, et les distances h et E sont par exemple les mêmes qu'à la figure 21.

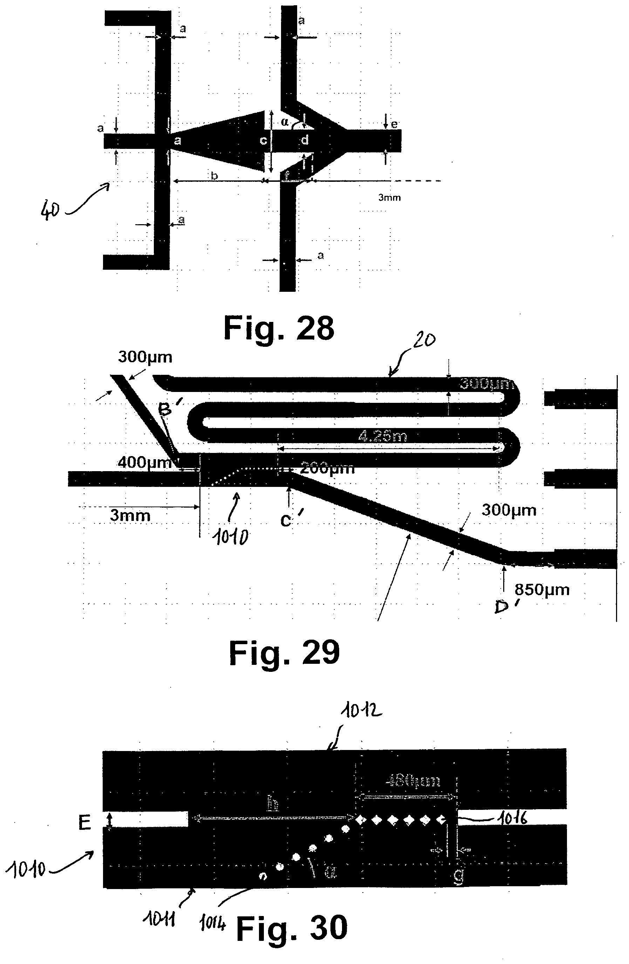

Le système microfluidique illustré aux figures 26 et suivantes est adapté à une profondeur des microcanaux dans le substrat 3 de 200 µm. Le serpentin 20 visible aux figures 26 et 27 est prévu pour maintenir au sein de l'unité d'extraction 1010 (voir figure 30) une pression de liquide dans la phase d'enrichissement supérieure à celle de la phase d'appauvrissement, pour éviter que des gouttelettes de cette dernière ne pénètrent dans cette phase d'enrichissement. On ajuste ainsi les résistances hydrodynamiques de ces phases en fonction de la viscosité de celles-ci. Comme illustré à la figure 27, on peut définir les caractéristiques du microcanal d'enrichissement 1012 par rapport à ses points de départ A' et d'arrivée B' dans l'unité 1010.

L'unité d'encapsulation 40 qui est illustrée à la figure 28 (correspondant au médaillon « zoom 1 » de la figure 26) est de type « MFFD », et ses dimensions visibles sont par exemple :

| | | | |
|---|---|---|---|
| a = 200 µm | b = 1,2 mm | c = 800 µm | d = 300 µm |
| e = 300 µm | f = 650 µm | α = 30°. | |

Comme illustré à la figure 29 (correspondant au médaillon « zoom 2 » de la figure 26), on peut définir les caractéristiques du microcanal d'appauvrissement 1011 par rapport à ses points de départ C' hors de l'unité 1010 et d'arrivée D' en sortie du système microfluidique.

Comme illustré à la figure 30 (correspondant au médaillon « zoom 3 » de la figure 26), cette unité d'extraction 1010 en forme de H est analogue à celle de la figure 21 (mêmes dimensions h, g, E et α), en supprimant toutefois le déflecteur 814a pour n'avoir comme moyens de transfert que la rangée oblique de plots cylindriques 1014 et l'alignement de piliers de stabilisation/ anti-retour 1016.

## Revendications

1. Système microfluidique (1) comportant un substrat (3) dans lequel est gravé un réseau de microcanaux comprenant une unité d'extraction (10 à 1010) d'éléments (E, E') de taille micrométrique ou millimétrique et qui est recouvert d'un capot de protection (2), l'unité d'extraction comprenant :
- un microcanal d'appauvrissement (11, 211, 511, 611, 811, 911, 1011) dans lequel circule une première phase (A, Ph1) à appauvrir,
- au moins un microcanal d'enrichissement (12, 212, 512, 613, 713, 912, 1012) dans lequel circule une deuxième phase (B, Ph2) à enrichir, ces microcanaux d'appauvrissement et d'enrichissement se rejoignant deux à deux par deux jonctions amont (Ja) et aval (Jb) en formant une chambre de transfert (13 à 513) entre ces jonctions, chaque jonction étant telle que les axes centraux de ces microcanaux soient parallèles ou forment un angle aigu de part et d'autre de la jonction, et
- des moyens de transfert (14, 214a, 214b, 314, 514, 614, 714a, 714b, 814, 814a, 814b, 1014) disposés dans ledit microcanal d'appauvrissement et aptes à transférer lesdits éléments de ce microcanal d'appauvrissement vers ledit au moins un microcanal d'enrichissement,
**caractérisé en ce que** lesdits moyens de transfert comprennent au moins une rangée de plots de transfert (14, 214a, 214b, 314, 514, 614, 714a, 714b, 814, 1014) formant un angle de 5° à 85° avec la direction du microcanal s'étendant transversalement à l'axe central dudit microcanal d'appauvrissement, les plots de transfert (14, 214a, 214b, 314, 514, 614, 714a, 714b, 814, 1014) étant destinés à dévier sélectivement tout ou partie desdits éléments (E, E') pour les forcer à se diriger vers le microcanal d'enrichissement, lesdits plots de transfert (14, 214a, 214b, 314, 514, 614, 714a, 714b, 814, 1014) étant dépourvus d'arêtes saillantes, et **en ce que** l'unité d'extraction comprend en outre des moyens de stabilisation d'interface (16 à 1016, 15a, 15b) qui sont disposés en aval des moyens de transfert entre lesdites jonctions et qui comprennent des piliers (16 à 1016) ou bien un revêtement de surface (15a, 15b) localisé sur une zone de la jonction aval (Jb) tournée vers l'un au moins des microcanaux.

2. Système (1) selon la revendication 1, **caractérisé en ce que** lesdits moyens de stabilisation d'interface (16 à 1016) comprennent lesdits piliers qui présentent des arêtes saillantes et dont le dernier est adjacent à ladite jonction aval (Jb), ces piliers étant de préférence régulièrement espacés avec le premier pilier qui est adjacent au dernier plot (14 à 1014).

3. Système (1) selon l'une des revendications 1 ou 2, **caractérisé en ce que** lesdits plots de transfert (14 à 1014) sont disposés sur ladite au moins une rangée en formant pour la ou chaque rangée un angle avec la direction de ce microcanal compris entre 20° et 60°.

4. Système (1) selon la revendication 3, **caractérisé en ce que** lesdits moyens de transfert comprennent plusieurs desdites rangées de plots (214a, 214b, 714a, 714b) qui sont agencées de manière successive le long dudit microcanal d'appauvrissement (211) dans ladite chambre (13), et qui comprennent :
- une rangée amont (214a, 714a) adjacente à ladite jonction amont (Ja), qui s'étend en outre sur au moins une partie de la section de passage dudit microcanal d'enrichissement adjacent (212) et qui est couplée à une sortie distale (212b1) de ce microcanal d'enrichissement, et
- au moins une rangée aval (214b, 714b) adjacente à ladite jonction aval (Jb), qui s'étend sur une section de passage inférieure à celle de la rangée amont et qui est couplée à une sortie proximale (212b2) de ce microcanal d'enrichissement formant par exemple une patte-d'oie avec ladite sortie distale et avec le microcanal d'appauvrissement.

5. Système (1) selon une des revendications précédentes, **caractérisé en ce que** lesdits moyens de transfert comprennent en outre au moins un déflecteur (414a, 814a, 814b) qui est constitué d'une saillie interne de la paroi latérale dudit microcanal d'appauvrissement (811) formée en regard de ladite chambre (413) et qui présente par exemple une section transversale triangulaire.

6. Système (1) selon l'une des revendications 1 ou 2, **caractérisé en ce que** lesdits microcanaux d'appauvrissement (511) et d'enrichissement (512) ont leurs jonctions amont (Ja) et aval (Jb) en forme de pattes-d'oie, lesdits plots de transfert (514), par exemple de section carrée, étant situés en aval de ladite jonction amont et de manière adjacente à ladite jonction aval, ces plots étant régulièrement espacés dans le prolongement de la paroi latérale de l'entrée (511a) du microcanal d'appauvrissement (511) qui est opposée à l'entrée (512a) du microcanal d'enrichissement (512), et dans le prolongement de la sortie (512b) du microcanal d'enrichissement, laquelle sortie est sensiblement coaxiale à l'entrée (511a) du microcanal d'appauvrissement, de sorte à canaliser lesdits éléments (E) sans les dévier de leur trajectoire de l'entrée (511a) dudit microcanal d'appauvrissement à la sortie (512b) dudit microcanal d'enrichissement.

7. Système (1) selon une des revendications précédentes, **caractérisé en ce que** ladite unité d'extraction (1010) est couplée en aval à un moyen de réduction des pertes de charge, tel qu'au moins un serpentin (20), moyen qui est également inclus dans ledit réseau de microcanaux et qui est destiné à maintenir une pression de ladite deuxième phase (B) supérieure à celle de ladite première phase (A) pour éviter que des gouttelettes de cette dernière ne pénètrent dans cette deuxième phase, ce moyen de réduction des pertes de charge étant également destiné à l'obtention de vitesses voisines pour ces phases.

8. Système (1) selon une des revendications précédentes, **caractérisé en ce qu'**il comprend en outre une unité d'encapsulation (40) desdits éléments (E, E'), tels que des amas de cellules, à laquelle ladite unité d'extraction (1010) est couplée en amont, l'unité d'extraction étant apte à assurer la gélification par réticulation de chaque capsule polymérique obtenue en sortie de l'unité d'encapsulation, un module de pré-gélification (PG) étant optionnellement intercalé entre ces unités d'encapsulation et d'extraction, et un module d'encapsulation supplémentaire (30) par exemple de type dispositif microfluidique à focalisation d'écoulement (« MFDD ») pouvant être prévu en aval de l'unité d'extraction.

9. Utilisation d'un système microfluidique (1) selon une des revendications précédentes pour extraire des éléments (E, E') de taille micrométrique ou millimétrique, tels que des amas de cellules comme par exemple des îlots de Langerhans, d'une première phase liquide (A, Ph1) à appauvrir vers au moins une deuxième phase liquide à enrichir (B, Ph2 à Ph4) miscible ou non avec cette première phase ou avec une phase intermédiaire (Ph2, Ph3) adjacente.

10. Utilisation d'un système microfluidique (1) selon la revendication 9, **caractérisé en ce qu'**elle consiste à réaliser la gélification par réticulation de capsules d'enrobage polymériques qui sont préalablement formées autour de ces éléments (E, E') au sein de ce système et qui sont par exemple à base d'un hydrogel d'alginate, par transfert de ces capsules enrobant respectivement lesdits éléments d'une phase organique huileuse (A, Ph1) à appauvrir les contenant vers une phase aqueuse (B, Ph4) à enrichir qui est immiscible avec cette phase huileuse et qui contient un agent gélifiant de préférence à base de polyions, tels que des ions calcium, ou bien **en ce qu'**elle consiste à utiliser des première et deuxième(s) phases à appauvrir et à enrichir (A et B, Ph2 à Ph4) miscibles deux à deux entre elles et à y générer, en aval de ladite chambre de transfert (13), un gradient transversal de concentration (F1).

11. Procédé d'extraction d'éléments (E, E') de taille micrométrique ou millimétrique, tels que des amas de cellules comme par exemple des îlots de Langerhans, d'une première phase liquide à appauvrir (A, Ph1) vers au moins une deuxième phase liquide à enrichir (B, Ph2 à Ph4) miscible ou non avec cette première phase ou avec une phase intermédiaire (Ph2, Ph3) adjacente, ce procédé comprenant une mise en contact des flux respectifs de ces phases, que l'on force à s'écouler par convection forcée en régime laminaire dans un microcanal d'appauvrissement (11, 211, 511, 611, 811, 911, 1011) et au moins un microcanal d'enrichissement (12, 212, 512, 613, 713, 912, 1012) gravés dans un substrat (3) d'un système microfluidique (1), de telle manière que ces flux soient, d'une part, sensiblement parallèles entre eux ou forment un angle aigu en se rejoignant en deux jonctions amont (Ja) et aval (Jb) entre ces microcanaux et, d'autre part, demeurent parallèles pendant toute la durée de leur contact mutuel, pour forcer le transfert de ces éléments d'une phase à l'autre exclusivement par fluidique passive, **caractérisé en ce que** ce procédé comprend un transfert desdits éléments du microcanal d'appauvrissement vers ledit au moins un microcanal d'enrichissement au moyen d'au moins une rangée de plots de transfert (14, 214a, 214b, 314, 514, 614, 714a, 714b, 814, 1014) formant un angle de 5° à 85° avec la direction du microcanal s'étendant transversalement à l'axe central dudit microcanal d'appauvrissement, les plots de transfert (14, 214a, 214b, 314, 514, 614, 714a, 714b, 814, 1014) étant destinés à dévier sélectivement tout ou partie desdits éléments (E, E') pour les forcer à se diriger vers le microcanal d'enrichissement, lesdits plots de transfert (14, 214a, 214b, 314, 514, 614, 714a, 714b, 814, 1014) étant dépourvus d'arêtes saillantes, puis une stabilisation d'interface réalisée en aval desdits plots et en amont de ladite jonction aval.

## Patentansprüche

1. Mikrofluidiksystem (1), das ein Substrat (3) beinhaltet, in das ein Netz von Mikrokanälen geätzt ist, das eine Extraktionseinheit (10 bis 1010) von Elementen (E, E') einer Größe im Mikrometer- oder Millimeterbereich umfasst und das mit einer Schutzabdeckung (2) bedeckt ist, wobei die Extraktionseinheit umfasst:
- einen Verarmungs-Mikrokanal (11, 211, 511, 611, 811, 911, 1011), in dem eine erste Phase (A, Ph1) zirkuliert, die verarmt werden soll,
- mindestens einen Anreicherungs-Mikrokanal (12, 212, 512, 613, 713, 912, 1012), in dem eine zweite Phase (B, Ph2) zirkuliert, die angereichert werden soll, wobei diese Verarmungs- und Anreicherungs-Mikrokanäle über zwei, stromaufwärtige (Ja) und stromabwärtige (Jb), Übergänge unter Bildung einer Transferkammer (13 bis 513) zwischen diesen Übergängen paarweise zusammenlaufen, wobei jeder Übergang derart ist, dass die Mittelachsen dieser Mikrokanäle parallel sind oder auf beiden Seiten des Übergangs einen spitzen Winkel bilden, und
- Transfermittel (14, 214a, 214b, 314, 514, 614, 714a, 714b, 814, 814a, 814b, 1014), die im Verarmungs-Mikrokanal angeordnet sind und die Elemente aus diesem Verarmungs-Mikrokanal in Richtung des mindestens einen Anreicherungs-Mikrokanals transferieren können,
**dadurch gekennzeichnet, dass** die Transfermittel mindestens eine sich quer zur Mittelachse des Verarmungs-Mikrokanals erstreckende Reihe von Transfernoppen (14, 214a, 214b, 314, 514, 614, 714a, 714b, 814, 1014) umfassen, die einen Winkel von 5° bis 85° zur Richtung des Mikrokanals bildet, wobei die Transfernoppen (14, 214a, 214b, 314, 514, 614, 714a, 714b, 814, 1014) dazu bestimmt sind, selektiv alle oder einen Teil der Elemente (E, E') abzulenken, um sie dazu zu zwingen, in Richtung des Anreicherungs-Mikrokanals zu steuern, wobei die Transfernoppen (14, 214a, 214b, 314, 514, 614, 714a, 714b, 814, 1014) frei von vorspringenden Kanten sind, und dadurch, dass die Extraktionseinheit weiter Schnittstellenstabilisierungsmittel (16 bis 1016, 15a, 15b) umfasst, die stromabwärts der Transfermittel zwischen den Übergängen angeordnet sind und die Stützen (16 bis 1016) oder auch eine Oberflächenbeschichtung (15a, 15b) umfassen, die sich an einem Bereich des stromabwärtigen Übergangs (Jb) befindet, der in Richtung mindestens eines der Mikrokanäle gewandt ist.

2. System (1) nach Anspruch 1, **dadurch gekennzeichnet, dass** die Schnittstellenstabilisierungsmittel (16 bis 1016) die Stützen umfassen, die vorspringende Kanten aufweisen, und von denen die letzte an den stromabwärtigen Übergang (Jb) angrenzt, wobei diese Stützen vorzugsweise regelmäßig zur ersten Stütze beabstandet sind, die an die letzte Noppe (14 bis 1014) angrenzt.

3. System (1) nach einem der Ansprüche 1 oder 2, **dadurch gekennzeichnet, dass** die Transfernoppen (14 bis 1014) an der mindestens einen Reihe unter Bilden, bei der oder jeder Reihe, eines Winkels zur Richtung dieses Mikrokanals im Bereich zwischen 20° und 60° angeordnet sind.

4. System (1) nach Anspruch 3, **dadurch gekennzeichnet, dass** die Transfermittel mehrere der Reihen von Noppen (214a, 214b, 714a, 714b) umfassen, die entlang des Verarmungs-Mikrokanals (211) in der Kammer (13) aufeinanderfolgend eingerichtet sind und die umfassen:
- eine an den stromaufwärtigen Übergang (Ja) angrenzende stromaufwärtige Reihe (214a, 714a), die sich weiter über mindestens einen Teil des Durchtrittsquerschnitts des angrenzenden Anreicherungs-Mikrokanals (212) erstreckt und die mit einem distalen Ausgang (212b1) dieses Anreicherungs-Mikrokanals gekoppelt ist, und
- mindestens eine an den stromabwärtigen Übergang (Jb) angrenzende stromabwärtige Reihe (214b, 714b), die sich über einen Durchtrittsquerschnitt erstreckt, der kleiner ist als derjenige der stromaufwärtigen Reihe und die mit einem proximalen Ausgang (212b2) dieses Anreicherungs-Mikrokanals gekoppelt ist, der zum Beispiel einen Krähenfuß mit dem distalen Ausgang und mit dem Verarmungs-Mikrokanal bildet.

5. System (1) nach einem der vorstehenden Ansprüche, **dadurch gekennzeichnet, dass** die Transfermittel weiter mindestens einen Ablenker (414a, 814a, 814b) umfassen, der aus einem inneren Vorsprung der Seitenwand des Verarmungs-Mikrokanals (811) besteht, der der Kammer (413) zugewandt gebildet ist und der zum Beispiel einen dreieckigen Querschnitt aufweist.

6. System (1) nach einem der Ansprüche 1 oder 2, **dadurch gekennzeichnet, dass** die Verarmungs- (511) und Anreicherungs-Mikrokanäle (512) ihren stromaufwärtigen (Ja) und stromabwärtigen (Jb) Übergang in Form von Krähenfüßen aufweisen, wobei die Transfernoppen (514), zum Beispiel von quadratischem Querschnitt, stromabwärts des stromaufwärtigen Übergangs und an den stromabwärtigen Übergang angrenzend liegen, wobei diese Noppen in der Verlängerung der Seitenwand des Eingangs (511a) des Verarmungs-Mikrokanals (511), der dem Eingang (512a) des Anreicherungs-Mikrokanals (512) gegenüberliegt, und in der Verlängerung des Ausgangs (512b) des Anreicherungs-Mikrokanals, welcher Ausgang im Wesentlichen zum Eingang (511a) des Verarmungs-Mikrokanals koaxial ist, regelmäßig beabstandet sind, sodass sie die Elemente (E) kanalisieren, ohne sie von ihrer Bahn vom Eingang (511a) des Verarmungs-Mikrokanals zum Ausgang (512b) des Anreicherungs-Mikrokanals abzulenken.

7. System (1) nach einem der vorstehenden Ansprüche, **dadurch gekennzeichnet, dass** die Extraktionseinheit (1010) stromabwärts mit einem Mittel zur Verringerung der Druckverluste, wie etwa mindestens einer Schlange (20) gekoppelt ist, Mittel, welches ebenfalls im Mikrokanalnetz eingeschlossen ist und das dazu bestimmt ist, einen Druck der zweiten Phase (B) über demjenigen der ersten Phase (A) zu halten, um zu verhindern, dass Tröpfchen dieser letzteren in diese zweite Phase eindringen, wobei dieses Mittel zur Verringerung der Druckverluste ebenfalls zum Erhalt von ähnlichen Geschwindigkeiten bei diesen Phasen bestimmt ist.

8. System (1) nach einem der vorstehenden Ansprüche, **dadurch gekennzeichnet, dass** es weiter eine Einheit zum Verkapseln (40) der Elemente (E, E'), wie etwa Zellcluster, umfasst, an die die Extraktionseinheit (1010) stromaufwärts gekoppelt ist, wobei die Extraktionseinheit das Gelieren durch Vernetzen jeder Polymerkapsel, die am Ausgang der Verkapselungseinheit erhalten wird, sicherstellen kann, wobei gegebenenfalls ein Vorgeliermodul (PG) zwischen diesen Verkapselungs- und Extraktionseinheiten eingefügt ist, und stromabwärts der Extraktionseinheit ein zusätzliches Verkapselungsmodul (30), zum Beispiel vom Typ einer Mikrofluidikvorrichtung mit Strömungsfokussierung ("MFDD"), vorgesehen sein kann.

9. Verwendung eines Mikrofluidiksystems (1) nach einem der vorstehenden Ansprüche, um Elemente (E, E') einer Größe im Mikrometer- oder Millimeterbereich, wie etwa Zellcluster, wie zum Beispiel Langerhans-Inseln, aus einer zu verarmenden ersten flüssigen Phase (A, Ph1) in Richtung mindestens einer anzureichernden zweiten flüssigen Phase (B, Ph2 bis Ph4), die mit dieser ersten Phase oder mit einer angrenzenden Zwischenphase (Ph2, Ph3) mischbar ist oder nicht, zu extrahieren.

10. Verwendung eines Mikrofluidiksystems (1) nach Anspruch 9, **dadurch gekennzeichnet, dass** sie darin besteht, das Gelieren durch Vernetzen von Polymerhüllkapseln, die zuvor innerhalb dieses Systems um diese Elemente (E, E') herum gebildet werden und die zum Beispiel auf Basis eines Alginat-Hydrogels sind, durch Transfer dieser Kapseln, die jeweils die Elemente umhüllen, aus einer zu verarmenden öligen organischen Phase (A, Ph1), die dieselben enthält, in Richtung einer anzureichernden wässrigen Phase (B, Ph4), die nicht mit dieser öligen Phase mischbar ist und die ein Geliermittel, vorzugsweise auf Basis von Polyionen, wie etwa Calcium-Ionen, enthält, auszuführen, oder auch dadurch, dass sie darin besteht, erste und zweite zu verarmende und anzureichernde Phasen (A und B, Ph2 bis Ph4) zu verwenden, die paarweise miteinander mischbar sind, und darin, stromabwärts der Transferkammer (13) einen transversalen Konzentrationsgradienten (F1) zu erzeugen.

11. Verfahren zum Extrahieren von Elementen (E, E') einer Größe im Mikrometer- oder Millimeterbereich, wie etwa Zellcluster, wie zum Beispiel Langerhans-Inseln, aus einer zu verarmenden ersten flüssigen Phase (A, Ph1) in Richtung mindestens einer anzureichernden zweiten flüssigen Phase (B, Ph2 bis Ph4), die mit dieser ersten Phase oder mit einer angrenzenden Zwischenphase (Ph2, Ph3) mischbar ist oder nicht, wobei dieses Verfahren ein Inkontaktbringen der jeweiligen Flüsse dieser Phasen umfasst, die dazu gezwungen werden, durch Zwangskonvektion im laminaren Betrieb in einem Verarmungs-Mikrokanal (11, 211, 511, 611, 811, 911, 1011) und mindestens einem Anreicherungs-Mikrokanal (12, 212, 512, 613, 713, 912, 1012), die in ein Substrat (3) eines Mikrofluidiksystems (1) geätzt sind, derart zu strömen, dass diese Flüsse einerseits im Wesentlichen parallel zueinander sind oder unter Zusammenlaufen an zwei, stromaufwärtigen (Ja) und stromabwärtigen (Jb), Übergängen zwischen diesen Mikrokanälen einen spitzen Winkel bilden, und andererseits während der ganzen Dauer ihres gegenseitigen Kontakts parallel bleiben, um den Transfer dieser Elemente aus einer Phase in die andere ausschließlich durch passive Fluidik zu erzwingen, **dadurch gekennzeichnet, dass** dieses Verfahren einen Transfer der Elemente aus dem Verarmungs-Mikrokanal in Richtung des mindestens einen Anreicherungs-Mikrokanals mittels mindestens einer sich quer zur Mittelachse des Verarmungs-Mikrokanals erstreckenden Reihe von Transfernoppen (14, 214a, 214b, 314, 514, 614, 714a, 714b, 814, 1014), die einen Winkel von 5° bis 85° zur Richtung des Mikrokanals bildet, wobei die Transfernoppen (14, 214a, 214b, 314, 514, 614, 714a, 714b, 814, 1014) dazu bestimmt sind, selektiv alle oder einen Teil der Elemente (E, E') abzulenken, um sie dazu zu zwingen, in Richtung des Anreicherungs-Mikrokanals zu steuern, wobei die Transfernoppen (14, 214a, 214b, 314, 514, 614, 714a, 714b, 814, 1014) frei von vorspringen Kanten sind, anschließend eine Schnittstellenstabilisierung, die stromabwärts der Noppen und stromaufwärts des stromabwärtigen Übergangs ausgeführt ist, umfasst.

## Claims

1. Microfluidic system (1) comprising a substrate (3) in which a network of micro-channels is etched comprising a unit for extracting (10 to 1010) elements (E, E') of micrometric or millimetric size and which is covered with a protective cover (2), the unit for extracting comprising:
- a depleting micro-channel (11, 211, 511, 611, 811, 911, 1011) which carries a first phase (A, Ph1) to be depleted,
- at least one enriching micro-channel (12, 212, 512, 613, 713, 912, 1012) which carries a second phase (8, Ph2) to be enriched, with these depleting and enriching micro-channels meeting two-by-two at two junctions upstream (Ja) and downstream (Jb) by forming a transfer chamber (13 to 513) between these junctions, each junction being such that the central axes of these micro-channels are parallel or form an acute angle on either side of the junction, and
- transfer means (14, 214a, 214b, 314, 514, 614, 714a, 714b, 814, 814a, 814b, 1014) arranged in said depleting micro-channel and able to transfer said elements from this depleting micro-channel to said at least one enriching micro-channel,
**characterised in that** said transfer means comprise at least one row of transfer blocks (14, 214a, 214b, 314, 514, 614, 714a, 714b, 814, 1014) forming an angle from 5° to 85° with the direction of the micro-channel extending transversally to the central axis of said depleting micro-channel, with the transfer blocks (14, 214a, 214b, 314, 514, 614, 714a, 714b, 814, 1014) being intended to selectively divert all or a portion of said elements (E, E') in order to force them to move towards the enriching micro-channel, said transfer blocks (14, 214a, 214b, 314, 514, 614, 714a, 714b, 814, 1014) being devoid of protruding edges, and **in that** the unit for extracting further comprises interface stabilising means (16 to 1016, 15a, 15b) which are arranged downstream from the transfer means between said junctions and which comprise pillars (16 to 1016) or a surface coating (15a, 15b) located on a zone of the downstream junction (Jb) turned towards at least one of the micro-channels.

2. System (1) according to claim 1, **characterised in that** said interface stabilising means (16 to 1016) comprise said pillars that have protruding edges and of which the last is adjacent to said downstream junction (Jb), with these pillars preferably being regularly spaced with the first pillar which is adjacent to the last block (14 to 1014).

3. System (1) according to any of claims 1 or 2, **characterised in that** said transfer blocks (14 to 1014) are arranged on said at least one row by forming for the or each row an angle with the direction of this micro-channel between 20° and 60°.

4. System (1) according to claim 3, **characterised in that** said transfer means comprise several of said rows of blocks (214a, 214b, 714a, 714b) which are arranged successively along said depleting micro-channel (211) in said chamber (13), and which comprise:
- an upstream row (214a, 714a) adjacent to said upstream junction (Ja), which furthermore extends over at least one portion of the section of passage of said adjacent enriching micro-channel (212) and which is coupled to a distal outlet (212b1) of this enriching micro-channel, and
- at least one downstream row (214b, 714b) adjacent to said downstream junction (Jb), which extends over a section of passage shorter than that of the upstream row and which is coupled to a proximal outlet (212b2) of this enriching micro-channel forming for example a crow's foot with said distal outlet and with the depleting micro-channel.

5. System (1) according to any of the preceding claims, **characterised in that** said transfer means further comprise at least one deflector (414a, 814a, 814b) which is formed from an inner protrusion of the side wall of said depleting micro-channel (811) formed facing said chamber (413) and which has for example a triangular transversal section.

6. System (1) according to any of claims 1 or 2, **characterised in that** said depleting (511) and enriching (512) micro-channels have their upstream (Ja) and downstream (Jb) junctions in the form of crow's feet, said transfer blocks (514), for example of square section, being located downstream from said upstream junction and adjacent to said downstream junction, with these blocks being regularly spaced in the extension of the side wall of the inlet (511a) of the depleting micro-channel (511) which is opposite the inlet (512a) of the enriching micro-channel (512), and in the extension of the outlet (512b) of the enriching micro-channel, said outlet is substantially coaxial to the inlet (511a) of the depleting micro-channel, in such a way as to channel said elements (E) without diverting them from their trajectory from the inlet (511a) of said depleting micro-channel to the outlet (512b) of said enriching micro-channel.

7. System (1) according to any of the preceding claims, **characterised in that** said unit for extracting (1010) is coupled downstream to a means for reducing load losses, such as at least one coil (20), a means which is also included in said network of micro-channels and which is intended to maintain a pressure of said second phase (B) higher than that of said first phase (A) in order to prevent the droplets of the latter from penetrating into this second phase, with this means for reducing load losses also being intended for obtaining neighbouring speeds for these phases.

8. System (1) according to any of the preceding claims, **characterised in that** it further comprises an encapsulation unit (40) of said elements (E, E'), such as clusters of cells, to which said unit for extracting (1010) is coupled upstream, the unit for extracting being able to provide the gelling by cross-linking of each polymer capsule obtained at the outlet of the encapsulation unit, a pre-gelling module (PG) being optionally inserted between these encapsulating and extracting units, and an additional encapsulation module (30), for example of the microfluidic flow focus device type ("MFDD"), that can be provided downstream from the unit for extracting.

9. Use of a microfluidic system (1) according to any of the preceding claims in order to extract elements (E, E') of micrometric or millimetric size, such as clusters of cells such as for example islets of Langerhans, from a first liquid phase (A, Ph1) to be depleted to at least one second liquid phase to be enriched (B, Ph2 to Ph4) miscible or not with this first phase or with an adjacent intermediate phase (Ph2, Ph3).

10. Use of a microfluidic system (1) according to claim 9, **characterised in that** it consists in carrying out the gelling by cross-linking of polymer coating capsules which are formed beforehand around these elements (E, E') within this system and which are for example based on an alginate hydrogel, by transfer of these capsules coating respectively said element from an oily organic phase (A, Ph1) to be depleted containing them to an aqueous phase (B, Ph4) to be enriched which is immiscible with this oily phase and which contains a gelling agent preferably with a polyion base, such as calcium ions, or **in that** it consists in using first and second phases to be depleted and to be enriched (A and B, Ph2 to Ph4) miscible two-by-two between them and to generate therein, downstream from said transfer chamber (13), a transversal concentration gradient (F1).

11. Method for extracting elements (E, E') of micrometric or millimetric size, such as clusters of cells such as for example islets of Langerhans, from a first liquid phase to be depleted (A, Ph1) to at least one second liquid phase to be enriched (B, Ph2 to Ph4) miscible or not with this first phase or with an adjacent intermediate phase (Ph2, Ph3), with this method comprising putting into contact the respective flows of these phases, that are forced to flow via forced convection in a laminar regime in a depleting micro-channel (11, 211, 511, 611, 811, 911, 1011) and at least one enriching micro-channel (12, 212, 512, 613, 713, 912, 1012) etched in a substrate (3) of a microfluidic system (1), in such a way that these flows, on the one hand, are substantially parallel to one another or form an acute angle by meeting at two upstream (Ja) and downstream (Jb) junctions between these micro-channels and, on the other hand, remain parallel throughout the entire duration of their mutual contact, in order to force the transfer of these elements from one phase to the other exclusively via passive fluidics, **characterised in that** this method comprises a transfer of said elements from the depleting micro-channel to said at least one enriching micro-channel by means of at least one row of transfer blocks (14, 214a, 214b, 314, 514, 614, 714a, 714b, 814, 1014) forming an angle from 5° to 85° with the direction of the micro-channel extending transversally to the central axis of said depleting micro-channel, with the transfer blocks (14, 214a, 214b, 314, 514, 614, 714a, 714b, 814, 1014) being intended to selectively divert all or a portion of said elements (E, E') in order to force them to move towards the enriching micro-channel, said transfer blocks (14, 214a, 214b, 314, 514, 614, 714a, 714b, 814, 1014) being devoid of protruding edges, followed by an interface stabilisation carried out downstream from said plots and upstream from said downstream junction.
